Europäisches Patentamt

European Patent Office

Office européen des brevets

(19)

(11) Veröffentlichungsnummer: **0 306 693 B1**

# (12) EUROPÄISCHE PATENTSCHRIFT

(45) Veröffentlichungstag der Patentschrift: **10.06.92**

(51) Int. Cl.⁵: **H04Q 11/04**, H04Q 3/545

(21) Anmeldenummer: **88112249.3**

(22) Anmeldetag: **28.07.88**

(54) **Modular strukturiertes digitales Kommunikationssystem.**

(30) Priorität: **21.08.87 DE 3727952**

(43) Veröffentlichungstag der Anmeldung:
**15.03.89 Patentblatt 89/11**

(45) Bekanntmachung des Hinweises auf die
Patenterteilung:
**10.06.92 Patentblatt 92/24**

(84) Benannte Vertragsstaaten:
**AT BE CH DE ES FR GB IT LI NL SE**

(56) Entgegenhaltungen:

**TELESIS/BNR, Nr. 1, 1987, Seiten 15-21, Ottawa, CA, US; D. FRAME et al.: "Meridian SL-100; Building block technologies bring digital to the desktop"**

**NACHRICHTENTECHNISCHE ZEITSCHRIFT N.T.Z., Band 39, Nr. 6, Juni 1986, Seiten 394-397, Berlin, DE; F. KADERALI et al.: "Steuerungskonzept einer ISDN-Vermittlungsanlage"**

**PROCEEDINGS OF THE INTERNATIONAL SWITCHING SYMPOSIUM, Florenz, 7.-11. Mai 1984, Teil 1, Seiten 1-7, North-Holland, Amsterdam, NL; G. RAAB et al.: "Architectural aspects for ISDN-PABX's in office communications systems"**

**TELCOM REPORT, Sonderausgabe, 1985, "ISND im Büro-HICOM", Seiten 67-75, Berlin, DE; G. OTT et al.: "HICOM-Software von heute für morgen"**

(73) Patentinhaber: **SIEMENS AKTIENGESELLSCHAFT**
**Wittelsbacherplatz 2**
**W-8000 München 2(DE)**

(72) Erfinder: **Muyssen, John, Dipl.-Ing**
**Draaitopstraat 61**
**B-09050 Evergem(BE)**
Erfinder: **Kuhlmann, Klaus, Dipl.-Ing.**
**Auenstrasse 102**
**W-8000 München 5(DE)**
Erfinder: **Sonnemann, Manfred, Dipl.-Ing.**
**Greppenstrasse 83**
**W-8031 Alling(DE)**

EP 0 306 693 B1

# Beschreibung

Modular strukturierte digitale Kommunikationssysteme dienen zur Verbindung von Endgeräte mit vielfältigen Leistungsmerkmalen untereinander und zur Verbindung dieser Endgeräte mit Kommunikationsnetzen, insbesondere öffentlichen Netzen.

Durch eine Sonderausgabe von "Telcom Report" - ISDN im Büro -1985 ist ein derartiges Kommunikationssystem bekannt, an das analoge und digitale Telefone, Fernkopierer, multifunktionale Terminals, Arbeitsplatzsysteme, Personal Computer, Teletex- und Bildschirmtextstationen und Datenendgeräte anschließbar sind. Die Struktur des Systems ist derart konzipiert, daß neben digitalen Terminals also auch noch der Anschluß herkömmlicher Geräte mit analoger Übertragung möglich ist; ebenso kann aber auch eine Vernetzung mit anderen Kommunikationssystemen hergestellt werden. Wesentlicher Bestandteil dieses Kommunikationssystems ist ein zentraler Kommunikationsrechner mit einer Systemdatenbasis und zumindest einem Multitasking-Betriebssystem. Unter einer "Task" ist dabei eine selbständige unabhängige Ablaufeinheit zu verstehen, die aus einem ablauffähigen Programm sowie seiner jeweiligen Ablaufumgebung, z. B. Speicherbelegung, Gerätezuteilung, besteht. Jede Task befindet sich zu jedem Zeitpunkt in einem der Zustände "Aktiv", "Warten" oder "Ruhe"; Tasks können vermittels eines Multitasking-Betriebssystems parallel zueinander ablaufen, wobei dies in der Praxis sowohl mittels mehrerer unabhängig voneinander arbeitender Prozessoren als auch mittels eines einzigen Prozessors in einem Zeitmultiplexverfahren erfolgen kann. Weitere wesentliche Eigenschaften von Tasks sind, daß sie über Meldungen miteinander kommunizieren und sich gegenseitig synchronisieren können.

Die eigentliche Schaltungstechnik des bekannten digitalen Kommunikationssystems ist modular derart aufgebaut, daß die gesamte Systemstruktur auf Funktionsmodulen basiert; interne Systemschnittstellen sichern dabei die Verbindung zwischen den Modulen. Wesentlichster Bestandteil des Kommunikationssystems ist der zentrale Kommunikationsrechner, der auch eine Multiprozessorkonfiguration aufweisen kann.

Die Leistungsfähigkeit eines derartigen digitalen Kommunikationssystems wird wesentlich durch die Software-Struktur des Systems bestimmt. Das bekannte Kommunikationssystem weist eine modular strukturierte Software-Architektur auf, deren wesentliche Bestandteile einerseits das Multitasking-Betriebssystem bzw. die Datenbasis und andererseits die eigentliche Vermittlungssoftware, bestehend aus der Peripheriesoftware, der Leitungstechnik-Software und der vermittlungstechnischen Verbindungs-Software sind. Zwischen diesen verschiedenen Software-Komplexen sind logische Meldungsschnittstellen vorgesehen, mit der die Softwarekomplexe in den unterschiedlichen Ausbaustufen des Kommunikationssystems auf verschiedene Steuerungshierarchien verteilt werden. Die Verteilung von Teilkomplexen der Steuerungssoftware auf einzelne Software-Module bzw. die gesamte Software-Struktur des bekannten Kommunikationssystems sind auf eine Anlagengröße von mehreren Hundert bis zu mehreren Tausend Anschlüssen abgestimmt.

Die der Erfindung zugrundeliegende Aufgabe besteht darin, ein modular strukturiertes digitales Kommunikationssystem zu schaffen, das optimal auf einen Bereich von einigen Anschlüssen bis zu einigen Hundert Anschlüssen abgestimmt ist, wobei davon ausgegangen wird, daß der Kommunikationsdienst Sprache im Verbindungsverkehr vorherrscht.

Diese Aufgabe wird gelöst durch ein modular strukturiertes Kommunikationssystem zur Verbindung von vielfältige Leistungsmerkmale bietenden Endgeräten untereinander und mit insbesondere öffentlichen Netzen mit einem zentralen Kommunikationsrechner mit einer Systemdatenbasis und zumindest einem Multitasking-Betriebssystem

- zur Verwaltung einer Leitungstechnik-Task mit einem im Sinne eines logischen Netzknotens Verteilerfunktionen ausübenden Leitungstechnik-Taskorganisationsprogramm hierarchisch untergeordneten, endgeräteartenspezifisch das Signalisierungsverfahren und die Benutzeroberfläche der Endgeräte steuernden Geräteprogrammodulen, denen jeweils individuell über definierte Datenbasiszugriffsroutinen die Systemdatenbasis zugänglich ist, und die eine von den Endgeräten abgegebene Anreize nach individuellen Leitungskriterien bewertende und logische Meldungen des Kommunikationsrechners in Einstelldaten für die Endgeräte umsetzende Vorverarbeitungs-Programmebene und eine von den Endgeräten abgegebene Anreize mittels systemspezifischer Parameter in logische Meldungen umsetzende Bewertungs-Programmebene aufweisen, und
- zur Verwaltung einer Vermittlungstechnik-Task mit einem im Sinne eines logischen Netzknotens Verteilerfunktionen ausübenden Vermittlungstechnik-Taskorganisationsprogramm hierarchisch untergeordneten Vermittlungsprozedur-Programmodulen, denen jeweils individuell über die definierten Datenbasiszugriffsroutinen die Systemdatenbasis zugänglich ist und die endgeräteklassenunabhängig und kommunikationsdiensteunabhängig im Sinne der Bildung logischer Teilprozesse des gesamten Vermittlungsprozesses derart strukturiert sind, daß neben wenigstens einem Verbindungssteuerung-Programmodul für die Steuerung des Aufbaus und Abbaus von Verbindungen weitere Leistungsmerkmal-Programmmodule für die Aktivierung und Deaktivierung von entsprechenden Steuerprozeduren gebildet sind, wobei

- - der Leitungstechnik-Task ein vom Leitungstechnik-Taskorganisationsprogramm verwalteter, mailboxartig betriebener Eingabe- und Ausgabespeicher und der Vermittlungstechnik-Task ein vom Vermittlungstechnik-Taskorganisationsprogramm verwalteter, mailboxartig betriebener Eingabe- und Ausgabespeicher zugeordnet ist;

- das Multitasking-Betriebssystem eine Programm-Busstruktur mit einem kommunikationsdienste- und endgeräteartenunabhängig allgemeingültig festgelegten Übertragungsprotokoll der darüber übermittelten Meldungen im Sinne eines logischen Netzknotens für die Interkommunikation der Verbindungssteuerung-Programmmodule und zumindest eines Teils der Leistungsmerkmal-Programmmodule mit den Geräteprogrammodulen über die Ein- und Ausgabespeicher der Vermittlungstechnik-Task und der Leitungstechnik-Task bildet und verwaltet.

Als erfindungswesentlich ist insbesondere anzusehen, daß die Geräteprogrammodule endgeräteartenspezifisch derart ausgebildet sind, daß mit ihnen das gesamte Signalisierungsverfahren und die komplette Benutzeroberfläche der Endgeräte beherrscht wird und daß ein kommunikationsdienste- und endgeräteartenunabhängig allgemeingültig festgelegtes Übertragungsprotokoll der über die Programm-Busstruktur des Multitasking-Betriebssystems übermittelten Meldungen vorgesehen wird. Diese beiden Strukturmerkmale sind wesentliche Voraussetzung dafür, daß innerhalb der Vermittlungstechnik-Task sowohl die Gesamtstruktur der Vermittlungsprozedur-Programmmodule als auch die Verteilung einzelner Teilprozesse für die Verbindungssteuerung auf die Vermittlungsprozedur-Programmmodule endgeräteklassenunabhängig und kommunikationsdiensteunabhängig erfolgen kann. Damit ist der für die Praxis wesentliche Vorteil verbunden, daß ein derartiges digitales Kommunikationssystem in einer beliebigen Erstausstattung später jederzeit durch zusätzliche Endgerätearten und Kommunikationsdienste ergänzbar ist, ohne daß die Grundstruktur des modular strukturierten Kommunikationssystems geändert werden muß. Bei Auftreten neuer Endgerätearten muß lediglich ein entsprechendes Geräteprogrammodul in die Leitungstechnik-Task eingefügt werden, während die übrigen Strukturbestandteile, also insbesondere die Vermittlungstechnik-Task, davon unbeeinflußt bleiben. Dies ist im wesentlichen dadurch bedingt, daß durch die erfindungsgemäße Struktur des Kommunikationssystems die Abhängigkeiten von Kommunikansten und Gerätearten allein in den Bereich der Leitungstechnik-Task bzw. in den der Datenbasis verlegt sind, so daß die Vermittlungstechnik-Task auf reine Verbindungssteuerung unabhängig von der Art der miteinander zu verbindenden Endgeräte und der von diesen genutzten Kommunikationsdienste ausgelegt werden kann.

Es ist allerdings in diesem Zusammenhang auch denkbar, daß bestimmte Leistungsmerkmale, die lediglich in einem Kommunikationsdienst auftreten können, in einem separaten Leistungsmerkmal-Programmmodul der Vermittlungstechnik-Task zusammengefaßt sind. Eine solche Strukturierungsmaßnahme erlaubt einen optimal geringen Grundausbau des Kommunikationssystems, da einerseits solche kommunikationsdienstespezifischen Leistungsmerkmale nicht durch entsprechende Leistungsmerkmal-Programmmodule vorgeleistet sind, andererseits dagegen bei späterer Einbeziehung solcher Kommunikationsdienste eine entsprechende Einfügung solcher Leistungsmerkmal-Programmmodule ohne Schwierigkeiten möglich ist.

Insgesamt weist das erfindungsgemäß modular strukturierte digitale Kommunikationssystem eine universelle Struktur für die verschiedensten Systemgrößen kleiner Systeme (einige bis einige Hundert Anschlüsse) auf. Die Struktur ermöglicht eine einfache additive Erweiterung und Änderung eines Grundausbaus des Kommunikationssystems, z. B. bei Teilnehmervermehrung, Leistungsmerkmal-Vermehrung und Endgerätearten-Erweiterung. Sämtliche Vermehrungen und Erweiterungen werden also durch zusätzliche Geräteprogramm-Module und/oder Vermittlungsprozedur-Programmmodule und Eingabe entsprechender Daten in die Datenbasis aufgefangen.

Die Erweiterung und Vermehrung innerhalb des Kommunikationssystems wird insbesondere auch dadurch erleichtert, daß im Bereich der der Endgeräteartenanpassung dienenden Leitungstechnik-Strukturebene nur eine Leitungstechnik-Task vorgesehen wird, da alle Leitungstechnik-Funktionen für vermittlungstechnische Endgeräte die gleiche Priorität haben. In diesem Zusammenhang ist gemäß einer vorteilhaften Weiterbildung der Erfindung vorgesehen, daß die Leitungstechnik-Task durch eine Koppelfeld-Task mit einem von einem Koppelfeld-Taskorganisationsprogramm verwalteten Koppelfeld-Geräteprogrammodul ergänzt ist. Diese Strukturmaßnahme dient im wesentlichen der Verbesserung der Steuerungsdynamik.

Die Anpassung der Leitungstechnik-Strukturebene an die eigentliche Peripherie des Kommunikationssystems erfolgt vorzugsweise derart, daß ein von einem Eingabe-/Ausgabeprozessor verwalteter Peripheriespeicher jeweils einen jeweils unabhängig voneinander steuerbaren Eingabeanschluß für in der Leitungstechnik-Task und/oder in der Koppelfeld-Task gewonnene Meldungen für die Endgeräte und Ausgabeanschluß für aus Anreizen der Endgeräte gewonnene Meldungen aufweist. Eine Anpassung der Übermittlungsprozeduren für Meldungen zwischen dem Eingabe-/Ausgabeprozessor und der Leitungstechnik-Strukturebene an die Übergabeprozeduren zwischen der Leitungstechnik-Strukturebene und der Vermittlungstechnik-Strukturebene wird dadurch erzielt, daß sowohl dem Eingabeanschluß als auch dem Ausgabeanschluß jeweils ein mailboxartig betriebener Übergabespeicher zugeordnet ist und daß die Geräteprogrammodule der Leitungstechnik-Task mit dem Übergabespeicher für die an die Endgeräte auszugebenden Meldungen verknüpft sind. Dem gleichen Zweck dienen Weiterbildungen der Erfindung gemäß denen der Koppelfeld-Task ein vom Koppelfeld-Taskorganisationsprogramm verwalteter mailboxartig betriebener Ein- und Ausgabespeicher zugeordnet ist, der eingangsseitig mit dem Übergabespeicher für die von den Endgeräten eingegebenen Anreize verknüpft ist und daß das Koppelfeld-Geräteprogrammodul der Koppelfeld-Task mit dem Übergabespeicher für die an die Endgeräte auszugebenden Meldungen verknüpft ist. In gleicher Weise wie die Übermittlung von Meldungen zwischen der Leitungstechnik-Strukturebene und der Vermittlungstechnik-Strukturebene erfolgt demgemäß die Übermittlung der von den Endgeräten initiierten Anreize von dem zugeordneten Übergabespeicher an den Eingabe- und Ausgabespeicher der Leitungstechnik-Task und/oder der Koppelfeld-Task und/oder von den Geräteprogrammodulen an den Übergabespeicher für die an die Endgeräte auszugebenden Meldungen in einer Transportschicht eines Meldungsprotokolles des Multitasking-Betriebssystems. Das Bilden von Meldungen und ihre Übergabe von dem Eingabe-/Ausgabeprozessor an die Leitungstechnik-Task bzw. an die Datenbasis erfolgt dabei vorzugsweise in der gleichen Weise wie das Bilden und die Übergabe von Meldungen in der Leitungstechnik-Task und der Vermittlungstechnik-Task bzw. zwischen diesen. Dies wird durch eine vorteilhafte Weiterbildung der Erfindung unterstützt, gemäß der der Eingabe-/Ausgabeprozessor mit einem mit dem Multitasking-Betriebssystem identischen Betriebssystem ausgestattet ist.

Die Bewertungsprogrammebene der in der Leitungstechnik-Task vorhandenen Geräteprogrammodule bewertet von den Endgeräte initiierte und von dem Eingabe-/Ausgabeprozessor an die Geräteprogrammodule abgegebene Anreize anhand von systeminternen Parametern und setzt sie in entsprechend interpretierte logische Anreize um. So wird beispielsweise eine Schleifenunterbrechung bei einem Impulswahlfernsprecher mit Hilfe eines entsprechenden dieser Endgeräteart zugeordneten Parameters als die Ziffer 1 interpretiert, während bei Einsatz eines Tastwahlfernsprechers eine auftretende Schleifenunterbrechung mittels eines dieser Endgeräteart zugeordneten Parameters als Betätigung der Signaltaste interpretiert wird. Bei Einsatz von ISDN-Endgeräten, mit denen generell logische Anreize generiert werden, kann auf das Heranziehen systeminterner Parameter für die Bewertung der logischen Anreize verzichtet werden; die Bewertungsprogrammebene kann in solchen Fällen als logische Null-Funktion betrachtet werden.

Vorzugsweise weist die Bewertungsprogrammebene ein Zuordnungsprogramm zur Unterscheidung zwischen Anreizen, die einen vermittlungstechnischen Prozeß starten und Anreizen, die Zusatzinformationen für einen gestarteten Prozeß bilden, auf. Beispielsweise wird durch das Abheben eines Handapparates ein vermittlungstechnischer Prozeß gestartet, während anschließend gewählte Ziffern Zusatzinformationen für diesen vermittlungstechnischen Prozeß darstellen. Das Zuordnungsprogramm ist dabei derart strukturiert, daß bei Auftreten eines einen vermittlungstechnischen Teilprozeß startenden Anreizes zu einem Zeitpunkt, in dem ein anderer vermittlungstechnischer Teilprozeß läuft, eine Prüfung auf Verträglichkeit dieser beiden Teilprozesse durchgeführt wird. In Abhängigkeit vom Ergebnis dieser Prüfung kann entweder der zweite Prozeß gestartet werden oder eine Startmeldung für den neuen Teilprozeß bis zum Vorliegen einer Meldung über die Beendigung des ersten Teilprozesses unterdrückt werden. Läuft dagegen bei Auftreten eines einen vermittlungstechnischen Teilprozeß startenden Anreizes kein anderer vermittlungstechnischer Teilprozeß, so wird der Anreiz in eine Startmeldung für eines der Vermittlungsprozedur-Programmodule umgesetzt. Bei Auftreten von Anreizen, die Zusatzinformationen bilden, werden dagegen durch das Zuordnungsprogramm diesen Anreizen entsprechende logische Meldungen an eines der Vermittlungsprozedur-Programmodule weitergeleitet. Das Zuordnungsprogramm umfaßt für solche Zwecke ein Protokollprogramm zur Speicherung von Daten über die Art jedes gestarteten und noch andauernden Prozesses.

Für eine übersichtliche Strukturierung der Geräteprogrammodule wird der Umstand ausgenutzt, daß man die Menge der Funktionen eines Endgerätes jeweils in exklusive Untermengen aufteilen kann. So kann z. B. zwischen Leitungstasten zur gezielten Initialisierung eines Verbindungsaufbaus und die Einbeziehung von Leistungsmerkmalen initiierenden Funktionstasten unterschieden werden. In Anpassung an eine derartige Unterteilung sieht eine Weiterbildung der Erfindung vor, daß zumindest eine Art von Geräteprogrammodulen eine der Zahl jeweils exklusiver Untermengen aller Funktionen eines Endgerätes entsprechende Anzahl von Geräteprogramm-Teilmodulen aufweist und daß das Zuordnungsprogramm jeweils funktionsabhängig auf die Geräteprogramm-Teilmodule verzweigt.

In ähnlicher Weise können auch die Vermittlungsprozedur-Programmodule derart strukturiert werden, daß zumindest einige der Vermittlungsprozedur-Programmodule mehrere jeweils einer definierten Teilfunktion der Verbindungssteuerung zugeordnete Vermittlungsprozedur-Teilmodule aufweisen, auf die jeweils mittels eines vermittlungsprozedur-programmodulindividuellen Zuordnungsprogrammes verzweigt wird.

Eine weitere Strukturierungsmaßnahme in der Vermittlungstechnik-Strukturebene dient der Verbesserung der dynamischen Eigenschaften der Verbindungssteuerung und sieht vor, daß das Verbindungssteuerung-Programmodul direkt dem Vermittlungstechnik-Taskorganisationsprogramm untergeordnet ist und die Leistungsmerkmal-Programmodule in Form von Unterprogrammen des Verbindungssteuerung-Programmoduls in die Verbindungssteuerung einbezogen sind. Im Zuge des Verbindungsaufbaus wird dann jeweils durch das Verbindungssteuerung-Programmodul eines oder mehrere der Leistungsmerkmal-Programmodule angestoßen und zur Einleitung von leistungsmerkmalspezifischen Prozeduren veranlaßt. Die Zusammenarbeit zwischen dem Verbindungssteuerung-Programmodul und den Leistungsmerkmal-Programmodulen erfolgt dabei vorzugsweise derart, daß nach Durchführung der entsprechenden leistungsmerkmalspezifischen Programmschritte eine entsprechende Quittung an das Verbindungssteuerung-Programmodul abgegeben wird. Die Einbeziehung der Leistungsmerkmal-Programmodule kann dabei durch systeminterne Parameter erfolgen; beispielsweise kann ein angewähltes Endgerät einen Auftrag zur Anrufumleitung abgegeben haben, was in der Datenbasis als entsprechender Auftrag abgespeichert ist. Mittels Zugriff auf die Datenbasis ermittelt das Verbindungssteuerung-Programmodul diesen Auftrag und stößt ein entsprechendes Leistungsmerkmal-Programmodul an. Die Einbeziehung von Leistungsmerkmal-Programmodulen in den Verbindungsaufbau kann aber auch durch Wahl von Kennzahlen entweder durch Betätigung von Wähltasten oder durch eine Funktionstaste eingeleitet werden; ein Beispiel hierfür wäre eine Anforderung eines Vermittlungsplatzes.

Das Verbindungssteuerung-Programmodul und die Leistungsmerkmal-Programmodule umfassen steuerungstechnisch den Funktionsumfang aller peripherer schaltungstechnischer Systemeinheiten; neben vermittlungstechnischen Endgeräten wie analogen oder digitalen Fernsprechgeräten oder einem Vermittlungsplatz sind auch Verbindungssätze und ein digitales Koppelfeld zu diesen Einheiten zu zählen. Durch die Vermittlungsprozedur-Programmodule erfolgt also die Steuerung des Verbindungsaufbaus und Verbindungsabbaus zwischen Anschlüssen bzw. Geräten. Die Steuerung umfaßt die Abprüfung der entsprechenden Berechtigungen und die Durchführung von Wahlkontrollen. Mit Hilfe der Leistungsmerkmal-Programmodule erfolgt ein Aktivieren, Deaktivieren sowie Programmieren von Vermittlungstechnik-Leistungsmerkmalen aus einem vermittlungstechnischen Zustand heraus. In der Vermittlungstechnik-Strukturebene wird auch die Signalisierung von vermittlungstechnischen Zuständen zwischen den Endgeräten in optischer und akustischer Form eingeleitet und über die Leitungstechnik-Strukturebene in entsprechende Signale umgesetzt. Weitere Aufgaben, die in der Vermittlungstechnik-Strukturebene durch das Verbindungssteuerung-Programmodul realisiert werden, sind eine Ziffernbewertung z. B. für die Unterscheidung von Durchwahlverkehr oder Querverkehr, eine interne Rufnummernumwertung und die Steuerung von zentralen schaltungstechnischen Einrichtungen, wie z. B. einem Codeempfänger oder Tongeneratoren.

Eine vorteilhafte Weiterbildung der Erfindung betrifft die Steuerung eine digitalen Zeitmultiplex-Koppelfeldes des Kommunikationssystems und bezweckt, eine möglichst einheitliche Programmstruktur innerhalb der Vermittlungstechnik-Strukturebene zu erzielen. Dies wird dadurch erreicht, daß dem Verbindungssteuerung-Programmodul ein Koppelfeldsteuerung-Programmodul zugeordnet ist, in dem die Steuerung von Eingabe- und Ausgabespeichern eines digitalen Zeitmultiplex-Koppelfeldes logisch realisiert ist und dem der Eingabe- und Ausgabespeicher der Koppelfeld-Task im Sinne der Umsetzung logischer Meldungen in physikalische Schaltbefehle für das Koppelfeld zugeordnet ist. Die Koppelfeldsteuerung bzw. das Koppelfeldsteuerung-Programmodul stellt sich also als Unterprogrammodul des Verbindungssteuerung-Programmoduls dar und wird in gleicher Weise wie die Leistungsmerkmal-Programmodule aufgerufen. Im Unterschied zu den Leistungsmerkmal-Programmodulen ist jedoch eine direkte Verknüpfung des Koppelfeldsteuerung-Programmoduls mit der Leitungstechnik-Strukturebene vorgesehen.

Für den Fall, daß das erfindungsgemäße Kommunikationssystem auch für die Vermittlung von Datenpaketen - Paketvermittlung - eingesetzt ist, wird vorzugsweise ein der Steuerung eines Paketvermittlungs-Koppelfeldes dienendes Paketvermittlungs-Koppelfeldsteuerung-Programmodul vorgesehen, das mittels der Programm-Busstruktur mit dem Verbindungssteuerung-Programmodul und einem Paketvermittlungs-Koppelfeld-Geräteprogrammodul verknüpfbar ist. Dem Paketvermittlungs-Koppelfeldsteuerung-Programmodul ist also das gleiche Verbindungssteuerung-Programmodul hierarchisch übergeordnet; die Verknüpfung ist allerdings eine andere. Diese Struktur wird insbesondere in den Fällen gewählt werden, in denen in einem Grundausbau des Kommunikationssystems zunächst keine Paketvermittlung vorgesehen ist und dieser Kommunikationsdienst erst in einer späteren Betriebsphase nachgerüstet wird.

Während des Programmablaufes innerhalb der Vermittlungstechnik-Task wird sowohl auf vom Vermittlungstechnik-Taskorganisationsprogramm verwaltete taskindividuelle Speicher als auch auf die Datenbasis zugegriffen. Das Vermittlungstechnik-Taskorganisationsprogramm dient außerdem dem Aufruf bestimmter Prozeduren des Multitasking-Betriebssystems für die Abgabe bzw. Aufnahme von Meldungen an bzw. von den mailboxartig betriebenen Eingabe-/Ausgabespeichern. Weitere Aufgaben des Vermittlungstechnik-Taskorganisationsprogrammes sind die Versorgung der erforderlichen Schnittstellen innerhalb der Vermittlungstechnik-Task mit für die Verbindungssteuerung notwendigen Informationen beispielsweise über Zustand oder Anreize, Gerätespeicheradressen oder aktuelle Verbindungsspeicheradressen. Auch die zentralisierte Freigabe der Verbindungsspeicher des eigentlichen Koppelfeldes und eventuell benutzter Codeempfänger bei Verbindungsabbau erfolgt durch das Vermittlungstechnik-Taskorganisationsprogramm.

Die im Zusammenhang mit den Datenbasiszugriffsroutinen der Leitungstechnik-Task und der Vermittlungstechnik-Task hierarchisch übergeordnete Datenbasis dient primär der zentralen Verwaltung aller Daten der Vermittlungsprozedur-Programmodule und der Geräteprogrammodule sowie des Meldungs- und Datentransportes innerhalb der Software-Busstruktur, die als taskübergreifend anzusehen sind. In der Datenbasis wird dazu eine zentrale Schnittstelle für den Datenzugriff mit formaler Anlehnung an das Multitasking-Betriebssystem vorgesehen.

Bevorzugt wird das Datenlayout leistungsmerkmal- und endgeräteorientiert ausgelegt, so daß in späteren Ausbaustufen des Kommunikationssystems eine leichte Erweiterbarkeit desselben durch zusätzliche Leistungsmerkmale, Endgerätearten oder Kommunikationsdienste möglich ist.

Die Datenbasis kann grundsätzlich unveränderbare Daten, die nur gelesen und nie geändert werden, permanente Daten, die über eine Anlagenabschaltung hinaus erhalten bleiben sowie dynamische Daten, die bei einer Anlagenabschaltung nicht erhalten bleiben, aufnehmen. Diese Arten von Daten können in Form von aus Datenelementen gebildeten zusammenhängenden Speicherplätzen, Tabellen - Matrizen - jedes Matrixelement ist ein Speicherplatz -sowie verketteten Listen bestehen. Der Aufruf der Datenbasis-Zugriffsroutinen erfolgt jeweils über einen einzigen Überwachungsbefehl - Supervisor Call -, wobei der Ablauf der Datenbasis-Zugriffsroutinen im folgenden parametergesteuert ist.

Die Datenbasis ist gemäß einer vorteilhaften Weiterbildung der Erfindung derart strukturiert, daß in ihr Speicherbereiche für die Aufnahme von verbindungsrelevanten Daten für die Dauer der Verbindung und davon getrennte andere Speicherbereiche zur Aufnahme jeweils nur während eines Meldungsaustausches relevanter - flüchtiger - Daten vorgesehen sind. Die gezielte Abfrage der in den beiden Speicherbereichen niedergelegten Daten erfolgt vorzugsweise derart, daß die über die Programm-Busstruktur übermittelten Meldungen Speicheradressen zum gezielten Ansteuern der die zur jeweiligen Meldung gehörenden verbindungsrelevanten Daten enthaltenden Speicherbereiche enthalten. Neben den Speicheradressen enthalten die über die Programm-Busstruktur übermittelten Meldungen in ihrem Kopfteil Angaben über das die Meldung abgebende Programmodul einer Task und über das als Empfänger vorgesehene Programmodul einer Task.

Eine dynamische Entlastung der Leitungstechnik-Strukturebene und der Vermittlungstechnik-Strukturebene wird dadurch erreicht, daß in dem Speicherbereich zur Aufnahme flüchtiger Daten ein Speicherblock für von einem Endgerät abgegebene - transparente -Daten vorgesehen ist, die von einem der Geräteprogrammodule aufgenommen, aber weder in diesem Geräteprogrammodul noch in einem der Vermittlungsprozedur-Programmodule verarbeitet werden. Die Abgabe dieser transparenten Daten an ein Empfängerendgerät erfolgt derart, daß die transparenten Daten aus diesem Speicherblock an ein der Art des Empfängerendgerätes zugeordnetes Geräteprogrammodul zur Aussendung an das Empfängerendgerät abgebbar sind. Eine universelle Anpassung an den Verbindungsverkehr mit digitalen Endgeräten, insbesondere mit ISDN-Endgeräten wird dadurch erzielt, daß die Meldungen an den möglichen unterschiedlichen Kommunikationsdiensten in einem Datennutzkanal einer Verbindungsleitung zu den Endgeräten orientierte Service-Indikatoren umfassen, die als Basis für Kompatibilitätsprüfungen und zur Festlegung der dem jeweils angeforderten Kommunikationsdienst zugehörigen Empfängerendgeräteart ausgenutzt ist. Dieser Service-Indikator dient also zur Kennzeichnung des Dienstes im Nutzkanal, der aktuell in einer Verbindung vorliegt; Nutzkanal kann dabei sowohl der B-Kanal als auch der D-Kanal des ISDN-Protokolles sein. Der Service-Indikator ist somit, zumindest für ISDN-Endgeräte, eine notwendige Zusatzinformation zur Wahlinformation. Der Service-Indikator kann dabei lediglich als Hinweisinformation auf das Vorliegen einer ISDN-Verbindung ausgelegt werden, während die eigentlichen dienstespezifischen Informationen kein integraler Bestandteil der Meldungen sind, sondern in einen der Speicherbereiche - vorzugsweise in den Speicherbereichen für die Aufnahme von verbindungsrelevanten Daten - übergeben werden.

Die Erfindung wird im folgenden anhand eines in neun Figuren dargestellten Ausführungsbeispiels beschrieben. Dabei zeigen:

Fig. 1 Basisstruktur der Steuerung eines Kommunikationssystems;

Fig. 2 prinzipieller Aufbau eines Geräteprogrammodules;

Fig. 3 prinzipieller Aufbau eines Vermittlungsprozedur-Programmodules;

Fig. 4 Struktur und Systemumgebung der Leitungstechnik-Task;

Fig. 5 Struktur und Systemumgebung der Vermittlungstechnik-Task;

Fig. 6 grundsätzlicher Aufbau der zwischen den Tasken übertragenen Meldungen;

Fig. 7 taskübergreifende Meldungen beim Verbindungsaufbau;

Fig. 8 taskübergreifende Meldungen beim Verbindungsabbau und

Fig. 9 taskübergreifende Meldungen beim Aktivieren eines Leistungsmerkmales.

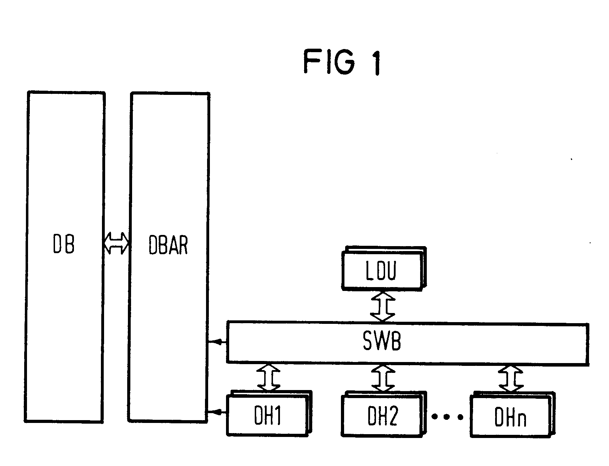

Die in der Fig. 1 dargestellte Basissteuerstruktur eines digitalen Kommunikationssystemes weist zwei Steuerstrukturebenen auf, von denen die eine mittels jeweils an eine Endgeräteart angepaßten Leitungstechnik-Programmodulen DH1, DH2...DHn (Device Handler) der Steuerung peripherer Geräte dient, zu denen nicht nur an die Peripherie angeschlossene Endgeräte, sondern auch zentrale schaltungstechnische Einrichtungen, wie Anschaltesätze und ein Koppelfeld, zählen. Jedes dieser Leitungstechnik-Programmodule DH1, DH2...DHn bietet eine systemeinheitliche Schnittstelle zur Vermittlungstechnik-Strukturebene, die im vorliegenden Fall durch ein Vermittlungsprozedur-Programmodul LDU (Logical Device Unit) repräsentiert ist. Der Informationsaustausch zwischen der Leitungstechnik-Strukturebene und der Vermittlungstechnik-Strukturebene erfolgt mittels allgemeingültig definierter Meldungen, die über eine Softwarebus-Struktur SWB übertragen werden, als integraler Bestandteil des Betriebssystemes eines nicht dargestellten Kommunikationsrechners angesehen werden kann. Das Vermittlungsprozedur-Programmodul LDU, die Leitungstechnik-Programmodule DH1, DH2...DHn und der Softwarebus SWB haben mittels Datenbasis-Zugriffsroutinen DBAR Zugang zur Datenbasis DB des gesamten Kommunikationssystemes.

Die Leitungstechnik-Programmodule DH1, DH2...DHn sind endgeräteartenspezifisch so ausgebildet, daß sie jeweils das Signalisierungsverfahren und die Benutzeroberfläche der entsprechenden Endgeräteart steuern, während das Vermittlungsprozedur-Programmodul LDU endgeräteartenunabhängig und kommunikationsdiensteunabhängig derart strukturiert ist, daß es den maximalen Funktionsumfang der peripheren Geräte und Einrichtungen steuerungstechnisch beherrscht. Die Aufgaben des Vermittlungsprozedur-Programmodules LDU umfassen also die für die Steuerung des Verbindungsaufbaus und -abbaus notwendigen Teilprozesse der gesamten Vermittlungsprozedur. So werden z. B. Berechtigungen geprüft, Wahlkontrollen durchgeführt, es erfolgt eine Signalisierung von vermittlungstechnischen Zuständen zwischen den Endgeräten und es ist ein Aktivieren und Deaktivieren von Vermittlungstechnik-Leistungsmerkmalen aus den verschiedenen vermittlungstechnischen Zuständen heraus durchführbar.

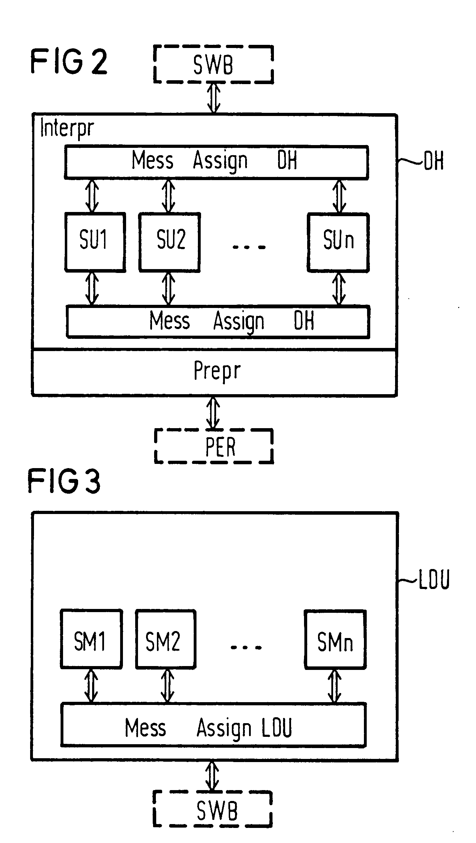

In der Fig. 2 ist die prinzipielle Struktur eines Leitungstechnik-Programmodules DH dargestellt. Im wesentlichen umfaßt diese Struktur eine Bewertungs-Programmebene Interpr und eine Vorverarbeitungs-Programmebene Prepr. In der Vorverarbeitungs-Programmebene Prepr werden von der Peripherie PER stammende Anreize nach individuellen Leitungskriterien bewertet und in einer entsprechend aufbereiteten Form an die Bewertungs-Programmebene Interpr abgegeben. Darüberhinaus dient die Vorverarbeitungs-Programmebene Prepr zur Umsetzung logischer Meldungen, die über den Softwarebus SWB an das Leitungstechnik-Programmodul DH übertragen werden, in Einstelldaten für die peripheren Geräte. Die an das Leitungstechnik-Programmodul DH übergebenen Meldungen können dabei auch vor einer Bearbeitung in der Vorverarbeitungs-Programmebene Prepr in der Bewertungs-Programmebene Interpr zusätzlich bewertet und umgesetzt werden. Im wesentlichen dient die Bewertungs-Programmebene Interpr jedoch der Umsetzung der von der Peripherie abgegebenen Anreize - teilweise nach vorheriger Behandlung in der Vorverarbeitungs-Programmebene Prepr - in logische Meldungen, wobei die Bildung dieser logischen Meldungen mittels systemspezifischer Parameter erfolgt, die zumindest zum Teil in der Datenbasis niedergelegt sind. Die Bewertungs-Programmebene Interpr weist Teilprogrammodule SU1, SU2...SUn auf, die jeweils vermittlungstechnischen Teilfunktionen in der Steuerung des Signalisierungsverfahrens und der Benutzeroberfläche der Endgeräte der Peripherie PER dienen. Auf diese Weise kann z. B. zwischen notwendigen Steuervorgängen bei Einzelziffernwahl, bei Wahl von Ziffernblöcken und bei Betätigung von Tasten zur Einleitung von Leistungsmerkmalen strukturell unterschieden werden. Die Zuweisung der Anreize bzw. Meldungen an die einzelnen Teilprogrammodule SU1, SU2...SUn erfolgt mittels eines Zuordnungsprogrammes Mess Assign DH (Message Assignment); dieses Zuordnungsprogramm Mess Assign DH dient auch dazu, zwischen Anreizen zu unterscheiden, die einerseits einen vermittlungstechnischen Prozeß starten und andererseits Zusatzinformationen für einen bereits gestarteten Prozeß bilden.

Die in Fig. 3 dargestellte prinzipielle Struktur eines Vermittlungsprozedur-Programmodules LDU ähnelt insofern der in der Fig. 2 dargestellten Struktur eines Leitungstechnik-Programmodules, als ebenfalls Teilprogrammodule SM1, SM2...SMn und ein Zuordnungsprogramm Mess Assign LDU vorgesehen sind. Die Vermittlungsprozedur-Teilprogrammodule SM1, SM2...SMn sind dabei jeweils einer definierten Teilfunktion der Verbindungssteuerung zugeordnet. Über den Softwarebus SWB werden Meldungen von der Leitungstechnik-Strukturebene aufgenommen bzw. an diese abgegeben.

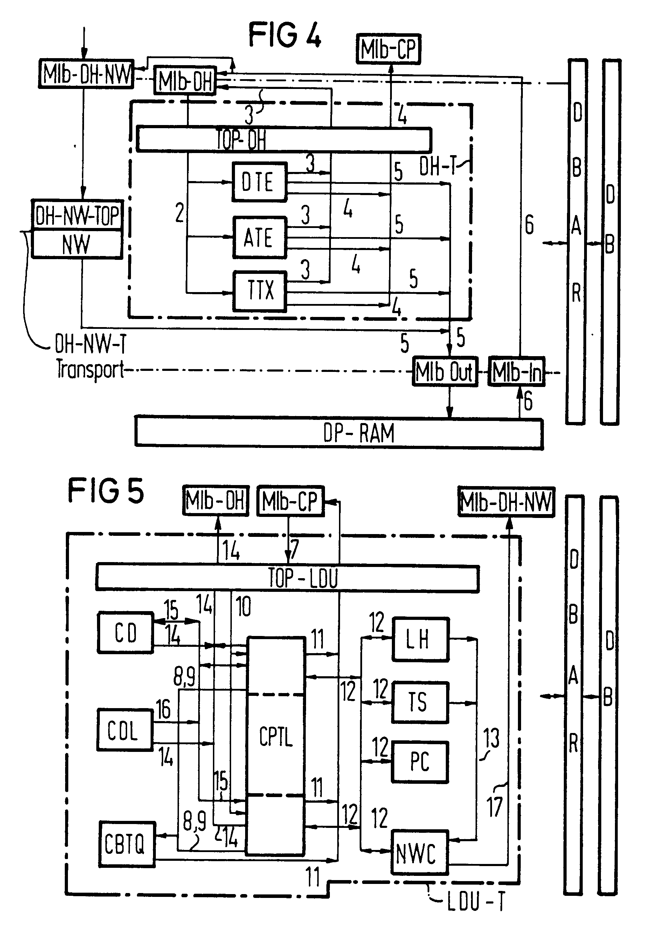

Die Fig. 4 zeigt die Leitungstechnik-Strukturebene in der Systemumgebung in detaillierter Darstellung. Die Leitungstechnik-Strukturebene wird im wesentlichen durch eine Leitungstechnik-Task DH-T gebildet, in der Geräteprogrammodule DTE, ATE, TTX einem Leitungstechnik-Taskorganisationsprogramm TOP-DH hierarchisch untergeordnet sind. Die Geräteprogrammodule DTE, ATE, TTX dienen dabei der Steuerung des Signalisierungsverfahrens und der Benutzeroberfläche digitaler Endgeräte DTE, analoger Fernsprechendgeräte ATE und Teletexgeräte TTX. In Richtung auf die Peripherie des Kommunikationssystemes arbeitet die Leitungstechnik-Task DH-T mit dem Speicher DP-RAM eines Eingabe-/Ausgabeprozessors zusammen. Die Übermittlung von Anreizen an die Leitungstechnik-Task DH-T bzw. von Einstelldaten an die Peripherie erfolgt über mailboxartig betriebene Übergabespeicher Mlb-In, Mlb-Out, die als integraler Bestandteil der Transportebene für Anreize und Einstelldaten aufzufassen sind. Die Transportebene ist ergänzt durch einen mailboxartig betriebenen Eingabe- und Ausgabespeicher Mlb-DH, über den von der Leitungstechnik-Task DH-T Anreize vom Übergabespeicher Mlb-In und von der nicht dargestellten Vermittlungstechnik-Strukturebene aufgenommen werden, wobei die von der Leitungstechnik-Task DH-T erzeugten und für die Vermittlungstechnik-Strukturebene bestimmten Meldungen an einen Eingabe- und Ausgabespeicher Mlb-CP abgegeben werden.

Die Leitungstechnik-Strukturebene ist ergänzt durch eine Koppelfeld-Task DH-NW-T, die ein Koppelfeld-Geräteprogrammodul NW aufweist, das einem Koppelfeld-Taskorganisationsprogramm DH-NW-TOP hierarchisch untergeordnet ist. Der Koppelfeld-Task DH-NW-T ist ebenfalls ein vom Koppelfeld-Taskorganisationsprogramm DH-NW-TOP verwalteter mailboxartig betriebener Eingabe- und Ausgabespeicher Mlb-DH-NW zugeordnet, der eingangsseitig mit dem Übergabespeicher Mlb-In für die von den Endgeräten eingegebenen Anreize verknüpft ist, der darüberhinaus aber auch Meldungen von der Vermittlungstechnik-Strukturebene aufnimmt.

Das Koppelfeld-Geräteprogrammodul NW sowie die Geräteprogrammodule DTE, ATE, TTX haben über die Datenbasis-Zugriffsroutinen DBAR Zugriff zur Datenbasis DB des Kommunikationssystemes.

Die durch Einflußpfeile symbolisch angedeuteten Schnittstellen innerhalb der Leitungstechnik-Strukturebene haben im einzelnen folgende Bedeutung:

1: Anstehende Meldung von der Vermittlungstechnik-Strukturebene zur Leitungstechnik-Task DH-T bzw. zur Koppelfeld-Task DH-NW-T.

2: Typspezifischer Programmansprung mit Schnittstellenversorgung durch das Leitungstechnik-Taskorganisationsprogramm TOP-DH aufgrund der angesprochenen Geräteart.

3: Meldungsschnittstelle innerhalb des gleichen Typs von Geräteprogrammodul.

4: Meldungsschnittstelle zur Vermittlungstechnik-Strukturebene.

5: Schnittstelle über den Speicher DP-RAM zur Peripherietechnik für transparente und nicht transparente Einstellung unter dem Einfluß von Warteschlangen-Programmen des Betriebssystems.

6: Schnittstelle über den Speicher DP-RAM von der Peripherietechnik, z. B. zur Aufnahme bewerteter Ergebnisse von Abfrageprozessen (Polling) der peripheren Endgeräte. Zielspeicher sind die mailboxartig betriebenen Eingabe- und Ausgabespeicher Mlb-DH, Mlb-DH-NW.

Die Schnittstellenansteuerung und -verwaltung z. B. zum Abspeichern von Gerätespeicheradressen, aktuellen Verbindungsspeicheradressen, der Aufruf von Transport-Prozeduren für den jeweiligen Eingabe- und Ausgabespeicher Mlb-DH, Mlb-DH-NW sowie die zentralisierte Freigabe der Verbindungsspeicher erfolgen jeweils durch das Leitungstechnik-Taskorganisationsprogramm TOP-DH bzw. TOP-NW-DH.

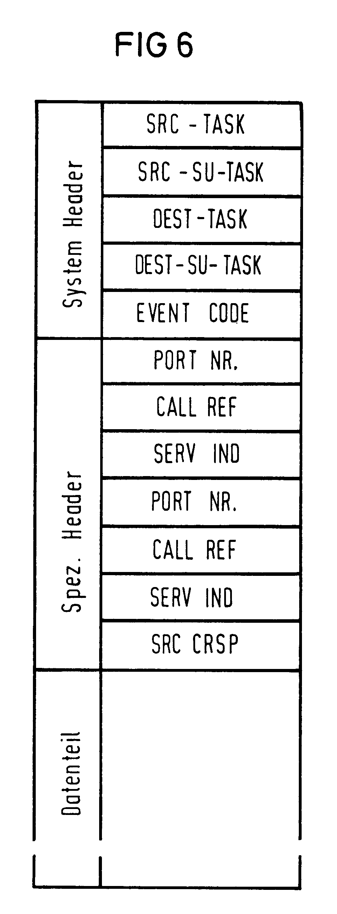

Die in der Fig. 5 dargestellte Vermittlungstechnik-Strukturebene weist wiederum prinzipielle Ähnlichkeit mit der in Fig. 4 dargestellten Leitungstechnik-Strukturebene auf. Eine Vermittlungstechnik-Task LDU-T weist ein Vermittlungstechnik-Taskorganisationsprogramm TOP-LDU auf, dem mehrere Vermittlungsprozedur-Programmodule hierarchisch untergeordnet sind. Die Verbindung der Vermittlungstechnik-Task LDU-T mit der Systemumgebung erfolgt bezüglich der Datenbasis DB wiederum über die Datenbasis-Zugriffsroutinen DBAR und bezüglich der Leitungstechnik-Strukturebenemittels der Eingabe- und Ausgabespeicher Mlb-DH bzw. Mlb-DH-NW in abgehender Richtung und in ankommender Richtung über den unmittelbar der Vermittlungstechnik-Task LDU-T zugeordneten Eingabe- und Ausgabespeicher Mlb-CP.

Die Vermittlungsprozedur-Programmodule sind derart strukturiert, daß ein Verbindungssteuerung-Programmodul CPTL (Call Processing Trunk Line), in dem durch gestrichelte Unterteilung zwei Teilmodule für Trunk- bzw. Linesteuerung angedeutet sind, und weitere sieben Leistungsmerkmal-Programmodule für die Aktivierung und Deaktivierung von entsprechenden leistungsmerkmaltypischen Steuerprozeduren gebildet sind. Die Funktion der Leistungsmerkmal-Programmodule wird im folgenden erläutert:

Leistungsmerkmal-Programmodul CD (Call Distribution):

Dieses Programmodul wird von dem Verbindungssteuerung-Programmmodul CPTL aufgerufen, wenn von einem Teilnehmer eine einen Vermittlungsplatz bezeichnende Kennzahl gewählt wurde, ein Anruf zum Vermittlungsplatz umgeleitet wird oder wenn ein Endgerät gerufen wird, für das ein Auftrag zur Umleitung ankommender Gespräche zu einem Vermittlungsplatz in der Datenbasis eingetragen ist. Neben dem Vermittlungsplatz kommen auch eine Nachtnebenstelle oder eine Rufweiterschaltstelle oder ähnliche, entsprechend vorbestimmte Stellen zur Aufnahme von Anrufen infrage. Die zu rufende Stelle wird jeweils aufgrund des aktuellen Zustandes der Anlage ermittelt; bei Änderungen des Zustandes der Anlage, z. B. beim Übergang von üblichem Verkehr zur Nachtschaltung wird die Signalisierung bei der gerufenen Stelle automatisch angepaßt, wovon die rufende Stelle nicht betroffen ist. Dieses Leistungsmerkmal-Programmodul CD kann auch so aufgebaut sein, daß es eine Quittung abgibt, wenn der Verbindungsaufbau - z. B. bei Wegeblockade in der Nachtschaltung - nicht erfolgen kann.

Leistungsmerkmal-Programmodul CDL (Call Dispatching Line):

Auch dieses Leistungsmerkmal-Programmodul CDL wird durch das Verbindungssteuerung-Programmodul aufgerufen; dies erfolgt, wenn ein Verbindungswunsch zu einem bestimmten Teilnehmer vorliegt, dieser Wunsch aber auch bei anderen Teilnehmern signalisiert werden muß, z. B. Makler-Reihenanlagen-Teilnehmer, Anrufübernahmegruppe. Das Leistungsmerkmal-Programmodul CDL ermittelt die zu rufenden Sprechstellen.

Leistungsmerkmal-Programmodul CBTQ (Call Back And Trunk Queuing):

In diesem Leistungsmerkmal-Programmodul CBTQ wird das Ein- und Austragen sowie die Ausführung von Rückruf- und Anrufwarteschlangen-Aufträgen realisiert.

Leistungsmerkmal-Programmodul LH (Line Hunting):

Mit diesem Leistungsmerkmal-Programmodul LH wird das Ein- bzw. Austragen und die Ausführung von Anrufen an einen oder mehrere Sammelanschlüsse realisiert.

Leistungsmerkmal-Programmodul PC (Paging Controller):

Auch dieses Leistungsmerkmal-Programmodul wird vom Verbindungssteuerung-Programmodul CPTL aufgerufen, entweder wenn eine entsprechende Kennzahl gewählt wurde oder ein Anruf auf das Personensuchsystem umgeleitet wurde. Das Leistungsmerkmal-Programmmodul PC verwaltet autonom die Suchwünsche, auch wenn der Auftraggeber bereits wieder aufgelegt hat. Wenn mehrere Wünsche simultan anstehen, kann die Suchsignalisierung synchronisiert werden. Es werden Meldewünsche entgegengenommen und der Verbindungsaufbau zwischen einem suchenden und einem meldenden Endgerät unterstützt. Zusätzlich kann die Abgabe einer Quittung an den Auftraggeber beim Eintragen der Suchaufträge veranlaßt werden.

Leistungsmerkmal-Programmodul TS (Trunk Searcher):

Das Programmodul TS sucht bei Vorliegen bestimmter Indikatoren in den Meldungen einen entsprechenden Leitungssatz. Das Leistungsmerkmal-Programmmodul TS liefert dabei für den Verbindungsverkehr die notwendigen Daten für die Ziffernaussendung, wie z. B. einzuhaltende Pausen zwischen Ziffern oder Umschaltung von Impulswahl auf Mehrfrequenz-Code-Wahl.

Zu den Leistungsmerkmal-Programmodulen wird auch das Leistungsmerkmal-Programmodul NWC (Network Controller) gerechnet, mit dem die gesamte logische Verbindungsspeichersteuerung und Koppelfeldsteuerung realisiert wird. Das Leistungsmerkmal-Programmodul NWC reserviert vorgegebene Wege und gibt sie auf Anweisung frei; es ist also für die Verwaltung der Zeitschlitze im Zeitmultiplex-Koppelfeld zuständig. Für die eigentliche physikalische Einstellung des Koppelfeldes werden vom Leistungsmerkmal-Programmodul NWC Schaltaufträge für das Koppelfeld-Geräteprogrammodul zusammengestellt und abgegeben. Die durch Einflußpfeile symbolisch angedeuteten Schnittstellen innerhalb der Vermittlungstechnik-Strukturebene haben im einzelnen folgende Bedeutung:

7: Anstehende Meldung von der Leitungstechnik-Strukturebene zur Vermittlungstechnik-Task LDU-T;

8, 9: Unterprogramm-Aufruf zur Ausführung eines Rückruf- bzw. Vormerkauftrages;

10: Aufruf des Verbindungssteuerung-Programmoduls CPTL mit Schnittstellenversorgung durch das Vermittlungstechnik-Taskorganisationsprogramm TOP-LDU;

11: Meldungsschnittstelle für die Übergabe von Meldungen innerhalb der Vermittlungstechnik-Task LDU-T;

12: Unterprogramm-Aufruf mit Quittung zu den Leistungsmerkmal-Programmodulen NWC, PC, TS, LH als Unterstützung während des Verbindungsaufbaus;

13: Unterprogramm-Aufruf zum der Koppelfeldsteuerung dienenden Leistungsmerkmal-Programmodul NWC durch die Leistungsmerkmal-Programmodule LH, TS zur Wegereservierung nach Suchen eines freien Sammelanschlußteilnehmers bzw. eines Anschaltesatzes;

14: Meldungsschnittstelle zur Verwaltung der Einstellaufträge für die Leitungstechnik-Strukturebene;

15: Unterprogramm-Aufruf mit Quittung durch das Verbindungssteuerung-ProgrammodulCPTL bei Anwahl eines Vermittlungsplatzes oder Anrufumleitung zu diesem zur Ermittlung der zu rufenden Nebenstelle;

16: Unterprogramm-Aufruf mit Quittung durch das Verbindungssteuerung-ProgrammodulCPTL, wenn ein Aufbau zu einem Teilnehmer vorliegt und eine Parallelsignalisierung zu anderen Sprechstellen durchgeführt werden soll;

17: Meldungsschnittstelle zur Zielmailbox Mlb-DH-NW der Koppelfeld-Task.

In der Fig. 6 ist der prinzipielle Aufbau der Meldungen sowohl innerhalb der Strukturebenen als auch zwischen den Strukturebenen dargestellt. Prinzipiell sind die Meldungen in drei Meldungsabschnitte unterteilt. Einem systemweit festgelegten Systemheader folgt ein spezifischer Header, der bei Meldungsverkehr zwischen zwei Strukturebenen je nach Übertragungsrichtung unterschiedlich ist. An diesen spezifischen Header schließt sich der eigentliche Datenteil an. Alle Meldungen werden in diesem Grundformat in einem Anwenderspeicher zusammengestellt.

Der systemweit für jede Kommunikation zwischen den Strukturebenen geltende Systemheader ist folgendermaßen aufgebaut: An erster Stelle steht eine Identifizierungsnummer der die Meldung abgebenden Task, die im anschließenden Feld durch eine Identifizierungsnummer des sendenden Programmoduls oder Programmteilmoduls innerhalb der sendenden Task ergänzt ist. In den beiden anschließenden Datenfeldern werden entsprechend die Identifizierungsnummer der empfangenden Task bzw. des empfangenden Moduls innerhalb dieser Task angegeben. Im Datenfeld EVENT CODE befindet sich ein logisches Element. Die möglichen weiteren Meldungselemente sind in den entsprechenden Speicherbereichen der Datenbasis abgelegt.

Der Aufbau des sich an den Systemheader anschließenden spezifischen Headers variiert je nach den miteinander im Meldungsverkehr stehenden Strukturebenen als auch mit der Übertragungsrichtung der Meldung zwischen diesen Strukturebenen. In der Fig. 6 wird von Meldungen zwischen der Leitungstechnik-Strukturebene und der Vermittlungstechnik-Strukturebene ausgegangen. Im ersten Datenfeld befindet sich die Anschlußbezeichnung einer Leitung, an der ein bestimmtes Teilnehmerendgerät als Sender auftritt. Im anschließenden Datenfeld ist die Rufnummer dieses sendenden Endgerätes enthalten. Daran schließt sich ein Feld für einen Service-Indikator an, mit dem eine Information über die Art des angeforderten Kommunikationsdienstes auf der Verbindungsleitung - insbesondere zu einem ISDN-Endgerät - gegeben wird. In den anschließenden drei Datenfeldern werden die gleichen verbindungsrelevanten Parameter für das als Empfänger vorgesehene Endgerät übertragen. Im daran anschließenden Datenfeld SRC CRSP (Store Pointer) werden Adressendaten für Speicherbereiche innerhalb der Datenbasis übertragen, in denen zu der Meldung gehörende weitere Daten abgelegt sind.

Im anschließenden Datenteil können Daten aus dem Speicherbereich für flüchtige Daten enthalten sein.

Insbesondere im spezifischen Header treten eine Fülle weiterer Meldungselemente auf, die z. B. angeben, um welche Signalisierungsnachricht es sich handelt, welcher B-Kanal einer ISDN-Verbindung vorgesehen ist oder welche Leistungsmerkmale übertragen werden sollen, die auch netzübergreifend im öffentlichen Netz vorhanden sind. Weitere Meldungselemente dienen der Übertragung von in der Vermittlungstechnik-Strukturebene erarbeiteten Anzeigeninformationen an die Endgeräte oder zur Übertragung von Gebühreneinheiten. Mit einer Fülle entsprechend logisch definierter Meldungselemente lassen sich für die Meldungen zwischen den einzelnen Strukturebenen des Kommunikationssystems unterschiedliche Meldungstypen festlegen, von denen einige wesentliche im folgenden beschrieben sind:

Alerting:

Dieser Meldungstyp wird für Meldungen von der Vermittlungstechnik-Strukturebene an die Leitungstechnik-Strukturebene verwendet und hat die Bedeutung, daß die Verbindung bis zum Ziel aufgebaut werden kann; die Meldung beinhaltet die Aussage, daß beim Verbindungsziel der Anruf signalisiert werden soll.

Cancel:

Dieser Meldungstyp wird in beiden Richtungen zwischen der Leitungstechnik-Strukturebene und der Vermittlungstechnik-Strukturebene eingesetzt, um die Deaktivierung von Leistungsmerkmalen anzufordern.

Cancel Acknowledge:

Diese Meldung erfolgt als Quittung auf die Meldung 'Cancel' und bestätigt die Deaktivierung des entsprechenden Leistungsmerkmals.

Cancel Reject:

Durch diese Meldung wird die Anforderung zur Deaktivierung eines Leistungsmerkmals zurückgewiesen.

Connect:

Dieser Meldungstyp wird wiederum zwischen der Leitungstechnik-Strukturebene und der Vermittlungstechnik-Strukturebene eingesetzt. In Richtung auf die Vermittlungstechnik-Strukturebene wird mit dieser Meldung die Rufannahme mitgeteilt, während in der umgekehrten Richtung der rufenden Seite mitgeteilt wird, daß die Verbindung bis zum Ziel durchgeschaltet ist.

Disconnect:

Die Meldung wird ausgehend von der Vermittlungstechnik-Strukturebene zur Leitungstechnik-Strukturebene benutzt, um mitzuteilen, daß die Verbindung nicht bis zum Ziel aufgebaut werden kann; z. B. weil der angerufene Teilnehmer besetzt ist. In dieser Phase können noch Leistungsmerkmale - z. B. Anforderung eines Verbindungsplatzes - angefordert werden.

Facility:

Von der Leitungstechnik-Strukturebene zur Vermittlungstechnik-Strukturebene wird mit dieser Nachricht aus einem Prozeß heraus ein verbindungsabhängiges Leistungsmerkmal - z. B. Aufschalten, Anklopfen - eingeleitet. In der umgekehrten Richtung wird aus einem Prozeß heraus mit dieser Meldung ein verbindungsabhängiges Leistungsmerkmal eingeleitet, z. B. Direktansprechen. Die Meldung 'Facility' kann dabei als logischer Oberbegriff für eine Vielzahl von Meldungen benutzt werden, wobei dann das eigentliche Leistungsmerkmal, das eingeleitet werden soll, in einem Meldungselement dieser Meldung gesendet wird.

Facility Acknowledge:

Zwischen der Vermittlungstechnik-Strukturebene und der Leitungstechnik-Strukturebene wird diese Meldung als positive Quittung für eine Leistungsmerkmalanforderung benutzt.

Facility Reject:

In beiden Richtungen wird mit dieser Meldung das Aktivieren eines angeforderten Leistungsmerkmals verweigert.

Information:

Zwischen der Vermittlungstechnik-Strukturebene und der Leitungstechnik-Strukturebene können mit dieser Meldung Zusatzinformationen - z. B. zur Signalisierung eines Anrufes an mehreren Sprechstellen - übermittelt werden. In Richtung auf die Vermittlungstechnik-Strukturebene können mit dieser Meldung auch Ziffern übertragen werden.

Register:

Diese Meldung wird in beiden Richtungen zwischen der Vermittlungtechnik-Strukturebene und der Leitungstechnik-Strukturebene benutzt, um die Aktivierung eines Leistungsmerkmals anzufordern, das nicht verbindungsbezogen ist. Die Meldung steht dabei als Oberbegriff für eine Vielzahl von Meldungen, die durch unterschiedliche Daten in wenigstens einem der Meldungselemente im Sinne der Unterscheidung unterschiedlicher Leistungsmerkmale individualisiert sind.

Register Acknowledge:

Diese Meldung wird in beiden Richtungen zwischen der Vermittlungstechnik-Strukturebene und der Leitungstechnik-Strukturebene benutzt, um die Aktivierung eines nicht verbindungsbezogenen Leistungsmerkmals zu bestätigen.

Register Reject:

Durch diese Meldung wird ebenfalls in beiden Richtungen die Anforderung zur Aktivierung eines Leistungsmerkmals zurückgewiesen.

Release:

Von der Leitungstechnik-Strukturebene zur Vermittlungstechnik-Strukturebene gerichtet, wird mit dieser Meldung ein Auslösevorgang eingeleitet. In der umgekehrten Richtung wird der Leitungstechnik-Strukturebene übermittelt, daß das Partnerendgerät ausgelöst hat. Diese Meldung kann auch dazu benutzt werden, um Verbindungswege und Töne abzuschalten.

Set Up:

Von der Leitungstechnik-Strukturebene zur Vermittlungstechnik-Strukturebene wird mit dieser Meldung ein vermittlungstechnischer Prozeß gestartet. Die Meldung enthält bei Blockwahl die gesamte und bei Einzelziffernwahl nur einen Teil der für den Verbindungsaufbau notwendigen Information. In der umgekehrten Richtung weist diese Meldung unterschiedliche Bedeutungsinhalte auf; je nachdem, welcher vermittlungstechnische Teilprozeß vorliegt, kann die Meldung eine Rufmeldung zur gerufenen Seite, die Belegung eines Satzes oder eine Parallelsignalisierung repräsentieren. Auch Schaltaufträge für ein digitales Koppelfeld - z. B. Wegedurchschalten oder Töne anschalten - werden mit dieser Meldung übermittelt.

Set Up Acknowledge:

In Richtung auf die Vermittlungstechnik-Strukturebene wird diese Meldung als positive Quittung gesendet, falls von der Leitungstechnik-Strukturebene Wahlbereitschaft festgestellt oder der Wählton erkannt wurde. In der umgekehrten Richtung wird diese Meldung als Quittung auf eine Meldung 'Set Up' gesendet, falls der angeforderte Prozeß gestartet werden konnte.

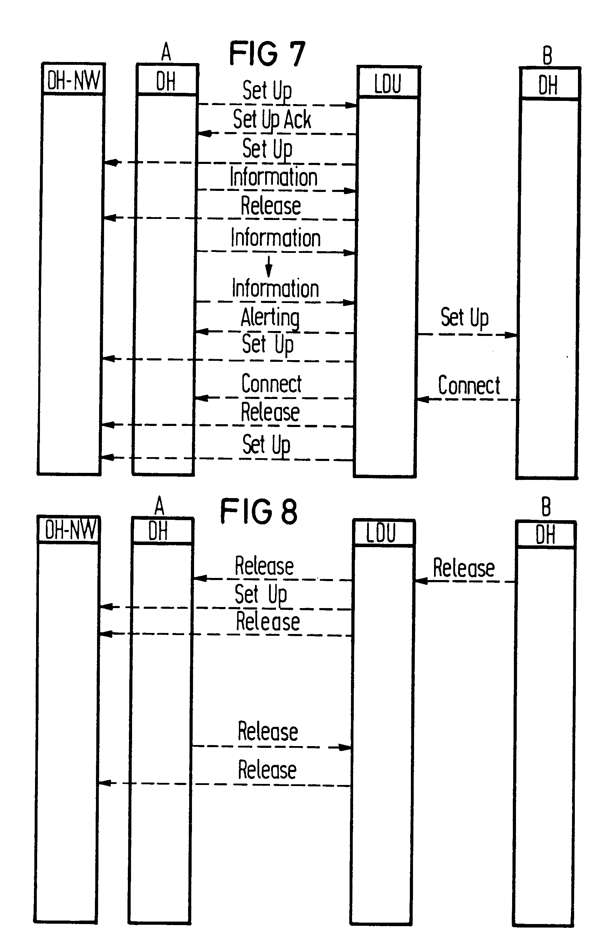

In der Fig. 7 ist der zeitliche Verlauf von Meldungen zwischen der Vermittlungstechnik-Strukturebene und der Leitungstechnik-Strukturebene dargestellt. Nach Abheben des Handapparates eines Fernsprechteilnehmers erfolgt ein Anreiz an die Leitungstechnik-Strukturebene, die von dieser in eine Meldung 'Set Up' an die Vermittlungstechnik-Strukturebene LDU umgesetzt wird. Als Quittung bekommt das Geräteprogrammodul des rufenden Teilnehmers die Meldung 'Set Up Acknowledge'.

Das Verbindungssteuerung-Programmodul in der Vermittlungstechnik-Strukturebene LDU versendet daraufhin eine Meldung 'Set Up' zur Koppelfeld-Task DH-NW, um den Wählton für den rufenden Teilnehmer anzuschalten. Beim Eintreffen der ersten Meldung 'Information' vom Geräteprogrammodul des rufenden Teilnehmers an die Vermittlungstechnik-Strukturebene LDU (die 'Information' umfaßt beispielsweise die erste Ziffer einer Wahlziffernfolge) wird der Wählton mit einer Meldung 'Release' zur Koppelfeld-Task DH-NW abgeschaltet.

Es folgen mehrere weitere Informationen (z. B. weitere Wählziffern), die jeweils an die Vermittlungstechnik-Strukturebene LDU abgegeben werden.

Nach Übermittlung aller Wählziffern werden von der Vermittlungstechnik-Strukturebene LDU folgende Meldungen abgeschickt:

Das Geräteprogrammodul des rufenden Teilnehmers erhält eine Meldung 'Alerting', sofern der gerufene Teilnehmer frei ist.

Eine Meldung 'Set Up' zur Koppelfeld-Task DH-NW schaltet den Freiton an und

eine Meldung 'Set Up′' wird zum Geräteprogrammodul DH des gerufenen Teilnehmers gesandt, wodurch ein Rufvorgang für das entsprechende Endgerät eingeleitet werden kann.

Wenn der gerufene Teilnehmer sich meldet, wird eine Meldung 'Connect' vom Geräteprogrammodul DH des gerufenen Teilnehmers erzeugt und an die Vermittlungstechnik-Strukturebene LDU abgegeben. Diese Meldung 'Connect' wird dann an das dem rufenden Teilnehmer zugeordnete Geräteprogrammodul DH weitergegeben. Anschließend wird in der Vermittlungstechnik-Strukturebene LDU eine Meldung 'Release' erzeugt und an die Koppelfeld-Task DH-NW abgegeben, wodurch der Freiton beim rufenden Teilnehmer wieder abgeschaltet wird.

Als letzte notwendige Meldung zur Zusammenschaltung der beiden Teilnehmer wird von der Vermittlungstechnik-Strukturebene LDU an die Koppelfeld-Task DH-NW eine entsprechende Meldung 'Set Up' abgesetzt.

In der Fig. 8 ist das Auslösen einer Verbindung zwischen zwei Teilnehmern dargestellt.

Es wird angenommen, daß der gerufene Teilnehmer (B) durch Einhängen seines Handapparates eine Verbindung beenden will. Dies führt dazu, daß von dem diesem Teilnehmer zugeordneten Geräteprogrammodul DH eine Meldung 'Release' zur Vermittlungstechnik-Strukturebene LDU abgegeben wird, die diese Meldung zu dem dem anderen Teilnehmer (A) zugeordneten Geräteprogrammodul DH weiterleitet. Darüberhinaus wird von der Vermittlungstechnik-Strukturebene LDU eine Meldung 'Release' zur Koppelfeld-Task DH-NW gesandt, um die Verbindung B-seitig auszulösen und eine Meldung 'Set Up' zur Koppelfeld-Task DH-NW um beim Teilnehmer (A) den Besetztton anzuschalten.

Wenn der Teilnehmer (A) daraufhin seinen Handapparat einhängt, erzeugt das diesem Teilnehmergerät zugeordnete Geräteprogrammodul DH eine Meldung 'Release', die an die Vermittlungstechnik-Strukturebene LDU abgegeben wird. Dies führt zur Erzeugung einer Meldung 'Release' in der Vermittlungstechnik-Strukturebene LDU, die an die Koppelfeld-Task DH-NW abgegeben wird, um dort den Besetztton abzuschalten und die Verbindung auch A-seitig auszulösen.

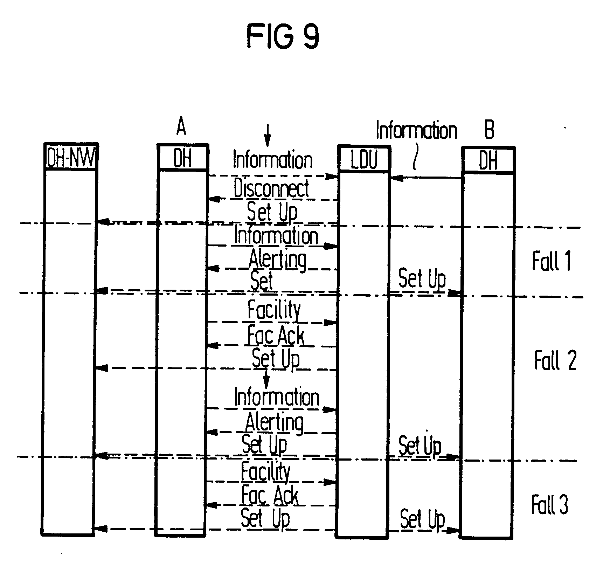

In der Fig. 9 ist der Meldungsverkehr zwischen den unterschiedlichen Strukturebenen des Kommunikationssystems bei dem Verbindungsaufbau zu einem besetzten Teilnehmer und anschließendem Aktivieren eines Leistungsmerkmals dargestellt. Nach Übergabe der letzten Wählziffer mit der Meldung 'Information' vom Geräteprogrammodul des A-Teilnehmers an die Vermittlungstechnik-Strukturebene LDU wird im Besetztfall des B-Teilnehmers der von dem diesem zugeordneten Geräteprogrammodul DH mittels einer Meldung 'Information' an die Vermittlungstechnik-Strukturebene LDU mitgeteilt wird, von dieser eine Meldung 'Disconnect' erzeugt, in der in einem bestimmten Meldungselement eine Begründung enthalten ist.

Die Koppelfeld-Task DH-NW erhält dann von der Vermittlungstechnik-Strukturebene LDU eine Meldung 'Set Up', die zum Anschalten des Besetzttones für den A-Teilnehmer führt.

Aus diesem vermittlungstechnischen Zustand heraus hat der A-Teilnehmer die Möglichkeit, ein verbindungsabhängiges Leistungsmerkmal einzuleiten, z. B. eine Aufschaltung auf die bestehende Verbindung des B-Teilnehmers zu veranlassen. Die Einleitung dieser Aufschaltung kann entweder durch eine Nachwahl (Fall 1), durch eine Signaltaste (Fall 2) oder durch Betätigen einer Funktionstaste (Fall 3) durchgeführt werden.

Bei Nachwahl (Fall 1) werden die zusätzlichen Wählziffern mittels der Meldung 'Information' an die Vermittlungstechnik-Strukturebene LDU abgegeben und bei Akzeptieren dieses Leistungsmerkmals erfolgt eine Meldung 'Alerting', die aussagt, daß die Verbindung bis zur gerufenen Seite aufgebaut werden kann und daß beim Verbindungsziel der Anruf signalisiert wird. Mit einer Meldung 'Set Up' an das Geräteprogrammodul DH des B-Teilnehmers wird eine Signalisierung des Aufschaltewunsches veranlaßt und mit einer Meldung 'Set Up' an die Koppelfeld-Task DH-NW die Verbindung zwischen A-Teilnehmer und B-Teilnehmer im Koppelfeld geschaltet.

Wird das Leistungsmerkmal "Aufschalten" durch Betätigung der Signaltaste und zusätzliche Wahl (Fall 2) eingeleitet, so wird zunächst vom Geräteprogrammodul des A-Teilnehmers die Meldung 'Facility' an die Vermittlungstechnik-Strukturebene LDU abgegeben und von dieser mit der Meldung 'Facility Acknowledge' quittiert. Zusätzlich wird eine Meldung 'Set Up' an die Koppelfeld-Task DH-NW abgegeben, um einen positiven Quittungston anzuschalten. Von der Wahl der zusätzlichen Ziffern (Meldung 'Information' bis zur A-teilnehmerseitigen und B-teilnehmerseitigen Durchschaltung des Koppelfeldes erfolgt der Meldungsaustausch in gleicher Weise wie in Fall 1 beschrieben.

Wird das Leistungsmerkmal mit einer entsprechenden Funktionstaste beim A-Teilnehmer eingeleitet, erfolgt zunächst wieder der Austausch der Meldungen 'Facility' bzw. 'Facility Acknowledge' zwischen dem dem A-Teilnehmer zugeordneten Geräteprogrammodul DH und der Vermittlungstechnik-Strukturebene LDU. Anschließend erfolgt dann mit einer Meldung 'Set Up' zum Geräteprogrammodul des B-Teilnehmers eine Signalisierung des Aufschaltewunsches und mit einer Meldung 'Set Up' zur Koppelfeld-Task DH-NW die Durchschaltung der Verbindung.

## Patentansprüche

1. Modular strukturiertes digitales Kommunikationssystem zur Verbindung von vielfältige Leistungsmerkmale bietenden Endgeräten untereinander und mit insbesondere öffentlichen Netzen mit einem zentralen Kommunikationsrechner mit einer Systemdatenbasis (DB) und zumindest einem Multitasking-Betriebssystem

- zur Verwaltung einer Leitungstechnik-Task (DH-T) mit einem im Sinne eines logischen Netzknotens Verteilerfunktionen ausübenden Leitungstechnik-Taskorganisationsprogramm (TOP-DH) hierarchisch untergeordneten, endgeräteartenspezifisch das Signalisierungsverfahren und die Benutzeroberfläche der Endgeräte steuernden Geräteprogrammodulen (DTE, ATE, TTX), denen jeweils individuell über definierte Datenbasiszugriffsroutinen (DBAR) die Systemdatenbasis (DB) zugänglich ist, und die eine von den Endgeräten abgegebene Anreize nach individuellen Leitungskriterien bewertende und logische Meldungen des Kommunikationsrechners in Einstelldaten für die Endgeräte umsetzende Vorverarbeitungs-Programmebene (Prepr) und eine von den Endgeräten abgegebene Anreize mittels systemspezifischer Parameter in logische Meldungen umsetzende Bewertungs-Programmebene (Interpr) aufweisen, und

- zur Verwaltung einer Vermittlungstechnik-Task (LDU-T) mit einem im Sinne eines logischen Netzknotens Verteilerfunktionen ausübenden Vermittlungstechnik-Taskorganisationsprogramm (TOP-LDU) hierarchisch untergeordneten Vermittlungsprozedur-Programmodulen, denen jeweils individuell über die definierten Datenbasiszugriffsroutinen (DBAR) die Systemdatenbasis (DB) zugänglich ist und die endgeräteklassenunabhängig und kommunikationsdiensteunabhängig im Sinne der Bildung logischer Teilprozesse des gesamten Vermittlungsprozesses derart strukturiert sind, daß neben wenigstens einem Verbindungssteuerung-Programmodul (CPTL) für die Steuerung des Aufbaus und Abbaus von Verbindungen weitere Leistungsmerkmal-Programmodule (LH, TS, PC, NC, CD, CDL, CBTQ) für die Aktivierung und Deaktivierung von entsprechenden Steuerprozeduren gebildet sind, wobei

- - der Leitungstechnik-Task (DH-T) ein vom Leitungstechnik-Taskorganisationsprogramm (TOP-DH) verwalteter, mailboxartig betriebener Eingabe- und Ausgabespeicher (Mlb-DH) und der Vermittlungstechnik-Task (LDU-T) ein vom Vermittlungstechnik-Taskorganisationsprogramm (TOP-LDU) verwalteter, mailboxartig betriebener Eingabe- und Ausgabespeicher (Mlb-CP) zugeordnet ist;
- das Multitasking-Betriebssystem eine Programm-Busstruktur (SWB-LDM, SWB-PDM) mit einem kommunikationsdienste- und endgeräteartenunabhängig allgemeingültig festgelegten Übertragungsprotokoll der darüber übermittelten Meldungen im Sinne eines logischen Netzknotens für die Interkommunikation der Verbindungssteuerung-Programmodule (CPTL) und zumindest eines Teils der Leistungsmerkmal-Programmodule (LH, TS, PC, NC, CD, CDL, CBTQ) mit den Geräteprogrammodulen (DTE, ATE, TTX) über die Ein- und Ausgabespeicher (Mlb-CP, Mlb-DH) der Vermittlungstechnik-Task (LDU-T) und der Leitungstechnik-Task (DH-T) bildet und verwaltet.

2. Kommunikationssystem nach Anspruch 1,
**dadurch gekennzeichnet,**
daß die Leitungstechnik-Task (DH-T) durch eine Koppelfeld-Task (DH-NW-T) mit einem von einem Koppelfeld-Taskorganisationsprogramm (DH-NW-TOP) verwalteten Koppelfeld-Geräteprogrammodul (DH-NW) ergänzt ist.

3. Kommunikationssystem nach Anspruch 1 oder 2,
**dadurch gekennzeichnet,**
daß ein von einem Eingabe/Ausgabeprozessor (IOP) verwalteter Peripheriespeicher (DP-RAM) jeweils einen jeweils unabhängig voneinander steuerbaren Eingabeanschluß für in der Leitungstechnik-Task (DH-T) und/oder in der Koppelfeld-Task (DH-NW-T) gewonnene Meldungen für die Endgeräte und Ausgabeanschluß für aus Anreizen der Endgeräte gewonnene Meldungen aufweist.

4. Kommunikationssystem nach Anspruch 3,
**dadurch gekennzeichnet,**
daß sowohl dem Eingabeanschluß als auch dem Ausgabeanschluß jeweils ein mailboxartig betriebener Übergabespeicher (Mlb-In; Mlb-Out) zugeordnet ist.

5. Kommunikationssystem nach Anspruch 3 oder 4,
**dadurch gekennzeichnet,**
daß die Geräteprogrammodule (DTE, ATE, TTX) der Leitungstechnik-Task (DH-T) mit dem Übergabespeicher (Mlb-Out) für die an die Endgeräte auszugebenden Meldungen verknüpft sind.

6. Kommunikationssystem nach den Ansprüchen 2 und 3,
**dadurch gekennzeichnet,**
daß der Koppelfeld-Task (DH-NW-T) ein vom Koppelfeld-Taskorganisationsprogramm (DH-NW-TOP) verwalteter mailboxartig betriebener Eingabe- und Ausgabespeicher (Mlb-DH-NW) zugeordnet ist, der eingangsseitig mit dem Übergabespeicher (Mlb-In) für die von den Endgeräten eingegebenen Anreizen verknüpft ist.

7. Kommunikationssystem nach den Ansprüchen 2 und 3 oder 6,
**dadurch gekennzeichnet,**
daß das Koppelfeld-Geräteprogrammodul (NW) der Koppelfeld-Task (DH-NW-T) mit dem Übergabespeicher (Mlb-Out) für die an die Endgeräte auszugebenden Meldungen verknüpft ist.

8. Kommunikationssystem nach den Ansprüchen 4 und 5,
**dadurch gekennzeichnet,**
daß die Übermittlung der von den Endgeräten initiierten Anreize von dem zugeordneten Übergabespeicher (Mlb-In) an den Eingabe-und Ausgabespeicher (Mlb-DH; Mlb-DH-NW) der Leitungstechnik-Task (DH-T) und/oder der Koppelfeld-Task (DH-NW-T) und/oder von den Geräteprogrammodulen (DTE, ATE; TTX) an den Übergabespeicher (Mlb-Out) für die an die Endgeräte auszugebenden Meldungen in einer Transportschicht eines Meldungsprotokolls des Multitasking-Betriebssystems erfolgt.

9. Kommunikationssystem nach einem der Ansprüche 3 bis 8,
**dadurch gekennzeichnet,**

daß der Eingabe/Ausgabeprozessor (IOP) mit einem mit dem Multitasking-Betriebssystem identischen Betriebssystem ausgestattet ist.

10. Kommunikationssystem nach einem der Ansprüche 1 bis 9,
**dadurch gekennzeichnet,**
daß die Bewertungsprogrammebene (Interpr) ein Zuordnungsprogramm (Mess Assign DH) zur Unterscheidung zwischen Anreizen, die einen vermittlungstechnischen Prozeß starten und Anreizen, die Zusatzinformationen für einen gestarteten Prozeß bilden, aufweist.

11. Kommunikationssystem nach Anspruch 10,
**dadurch gekennzeichnet,**
daß das Zuordnungsprogramm (Mess Assign) bei Auftreten eines einen vermittlungstechnischen Teilprozeß startenden Anreizes während eines laufenden anderen vermittlungstechnischen Teilprozesses eine Prüfung auf Verträglichkeit der beiden vermittlungstechnischen Prozesse durchführt und in Abhängigkeit davon den zweiten Prozeß startet oder eine Startmeldung für den neuen Prozeß bis zum Vorliegen einer Meldung über die Beendigung des ersten Prozesses unterdrückt.

12. Kommunikationssystem nach Anspruch 10 oder 11,
**dadurch gekennzeichnet,**
daß das Zuordnungsprogramm (Mess Assign DH) bei Auftreten von Zusatzinformationen bildenden Anreizen diesen entsprechende logische Meldungen an eins der Vermittlungsprozedur-Programmodule weiterleitet.

13. Kommunikationssystem nach einem der Ansprüche 10 bis 12,
**dadurch gekennzeichnet,**
daß das Zuordnungsprogramm (Mess Assign DH) ein Protokollprogramm zur Speicherung von Daten über die Art jedes gestarteten und noch andauernden Prozesses umfaßt.

14. Kommunikationssystem nach einem der Ansprüche 11 bis 15,
**dadurch gekennzeichnet,**
daß zumindest eine Art von Geräteprogrammodulen (DTE, ATE, TTX) eine der Zahl jeweils exklusiver Untermengen aller Funktionen eines Endgerätes entsprechende Anzahl von Geräteprogramm-Teilmodulen (SU1...SUn) aufweist und daß das Zuordnungsprogramm (Mess Assign DH) jeweils funktionsabhängig auf die Geräteprogramm-Teilmodule (SU1...SUn) verzweigt.

15. Kommunikationssystem nach einem der Ansprüche 1 bis 14,
**dadurch gekennzeichnet,**
daß zumindest einige der Vermittlungsprozedur-Programmodule (LDU) mehrere jeweils einer definierten Teilfunktion der Verbindungssteuerung zugeordnete Vermittlungsprozedur-Teilmodule (SM1...SMn) aufweisen, auf die jeweils mittels eines vermittlungsprozedur-programmodulindividuellen Zuordnungsprogrammes (Mess Assign LDU) verzweigt wird.

16. Kommunikationssystem nach einem der Ansprüche 1 bis 15,
**dadurch gekennzeichnet,**
daß das Verbindungssteuerung-Programmodul (CPTL) direkt dem Vermittlungstechnik-Taskorganisationsprogramm (TOP LDU) untergeordnet ist und die Leistungsmerkmal-Programmodule (LH, TS, PC, NC, CD, SCL, SBTQ) in Form von Unterprogrammen des Verbindungssteuerung-Programmoduls (CPTL) in die Verbindungssteuerung einbezogen sind.

17. Kommunikationssystem nach Anspruch 16,
**dadurch gekennzeichnet,**
daß die Verteilung der leistungsmerkmalbezogenen Programme auf die Leistungsmerkmal-Programmodule (LH, TS, PC, NWC, CD, SCL, SBTQ) derart vorgenommen ist, daß zumindest die auf kommunikationsdienstespezifischeLeistungsmerkmale bezogenen Programme jeweils in einem Leistungsmerkmal-Programmodul implementiert sind.

18. Kommunikationssystem nach einem der Ansprüche 6 bis 17,
**dadurch gekennzeichnet,**
daß dem Verbindungssteuerung-Programmodul (CPTL) ein Koppelfeldsteuerung-Programmodul (NWC) zugeordnet ist, in dem die Steuerung von Eingabe- und Ausgabespeichern eines digitalen Zeitmultiplex-Koppelfeldes logisch realisiert ist und dem der Eingabe- und Ausgabespeicher (Mlb-DH-NW) der Koppelfeld-Task (DH-NW-T) im Sinne der Umsetzung logischer Meldungen in physikalische Schaltbefehle für das Koppelfeld zugeordnet ist.

19. Kommunikationssystem nach einem der Ansprüche 15 bis 18,
**dadurch gekennzeichnet,**
daß ein der Steuerung eines Paketvermittlungs-Koppelfeldes dienendes Paketvermittlungs-Koppelfeldsteuerung-Programmodul vorgesehen ist, das mittels der Programm-Busstruktur (SWB-LDM, SWB-PDM) mit dem Verbindungssteuerung-Programmodul (CPTL) und einem Paketvermittlungs-Koppelfeld-Geräteprogrammodul verknüpfbar ist.

20. Kommunikationssystem nach einem der Ansprüche 1 bis 19,
**dadurch gekennzeichnet,**
daß in der Datenbasis (DB) Speicherbereiche (CRS) für die Aufnahme von verbindungsrelevanten Daten für die Dauer der Verbindung und davon getrennte andere Speicherbereiche (VDS) zur Aufnahme jeweils nur während eines Meldungsaustausches relevanter - flüchtiger - Daten vorgesehen sind.

21. Kommunikationssystem nach Anspruch 20,
**dadurch gekennzeichnet,**
daß die über die Programmbusstruktur (SWB-LDM, SWB-PDM) übermittelten Meldungen Speicheradressen zum gezielten Ansteuern der die zur jeweiligen Meldung gehörenden verbindungsrelevanten und/oder flüchtigen Daten enthaltenden Speicherbereiche (CRS, VDS) enthalten.

22. Kommunikationssystem nach einem der Ansprüche 1, 20 und 21,
**dadurch gekennzeichnet,**
daß die über die Programm-Busstruktur (SWB-LDM, SWB-PDM) übermittelten Meldungen in ihrem Kopfteil Angaben über das die Meldung abgebende Programmodul einer Task und über das als Empfänger vorgesehene Programmodul einer Task enthalten.

23. Kommunikationssystem nach einem der Ansprüche 20 bis 22,
**dadurch gekennzeichnet,**
daß in dem Speicherbereich (VDS) zur Aufnahme flüchtiger Daten ein Speicherblock für von einem Endgerät abgegebene - transparente - Daten vorgesehen ist, die von einem der Geräteprogrammmodule (DTE, ATE, TTX) aufgenommen, aber weder in diesem Geräteprogrammodul (DTE, ATE, TTX) noch in einem der Vermittlungsprozedur-Programmodule verarbeitet werden.

24. Kommunikationssystem nach Anspruch 23,
**dadurch gekennzeichnet,**
daß die transparenten Daten aus diesem Speicherblock an ein der Art des Empfängerendgerätes zugeordnetes Geräteprogrammodul (DTE, ATE, TTX) zur Aussendung an das Empfängerendgerät abgebbar sind.

25. Kommunikationssystem nach einem der Ansprüche 21 bis 24,
**dadurch gekennzeichnet,**
daß die Meldungen an den möglichen unterschiedlichen Kommunikationsdiensten in einem Datennutzkanal einer Verbindungsleitung zu den Endgeräten orientierte Service-Indikatoren umfassen, die als Basis für Kompatibilitätsprüfungen und zur Festlegung der dem jeweils angeforderten Kommunikationsdienst zugehörigen Empfängerendgeräteart ausgenutzt ist.

**Claims**

1. Digital communications system with a modular structure, for connecting terminal equipment having versatile performance features to one another and, preferably, to public networks having a central communications computer with a system database (DB) and at least one multitasking operating system
   - for the administration of a line technology task (DH-T) having equipment program modules (DTE, ATE, TTX) which are hierarchically subordinated to a line technology task organisation program (TOP-DH) exercising distributor functions in the sense of a logical network node and which control the signalling procedure and the user surface of the terminal equipment in a manner specific to the types of terminal equipment, the system database (DB) being respectively individually accessible to said equipment program modules via defined database access routines (DBAR) and which equipment program modules (DTE, ATE, TTX) have a preprocessing program level (Prepr) which interprets an alerting signal output by the terminal equipment according to individual line criteria and converts logical messages of the communications computer into setting data for the terminal equipment, and have an interpretation program level (Interpr) which converts an alerting signal output by the terminal equipment into logical messages, by means of system-specific parameters, and
   - for the administration of a switching technology task (LDU-T) having switching procedure program modules which are hierarchically subordinated to a switching technology task organisation program (TOP-LDU) exercising distributor functions in the sense of a logical network node, the system database (DB) being respectively individually accessible to said switching procedure program modules via the defined database access routines (DBAR), and which switching procedure program modules are structured independently of the class of terminal equipment and independently of the communications service, in the sense of forming logical subprocesses of the overall switching process, in such a manner that, in addition to forming at least one connection control program module (CPTL) for the control of the setting-up and clearing down of connections, further performance feature program modules (LH, TS, PC, NC, CD, CDL, CBTQ) for the activation and deactivation of corresponding control procedures are formed,

   - - the line technology task (DH-T) having an input and output memory (Mlb-DH), which is administered by the line technology task organisation program (TOP-DH) and is operated like a mailbox, allocated to it and the switching technology task (LDU-T) having an input and output memory (Mlb-CP), which is administered by the switching technology task organisation program (TOP-LDU) and is operated like a mailbox, allocated to it;

   - the multitasking operating system forms and administers a program bus structure (SWB-LDM, SWB-PDM) having a transmission protocol which is defined in a universally valid manner, independently of the communications service and independently of the type of terminal equipment, for the messages transmitted via said bus structure, in the sense of a logical network node for the intercommunication of the connection control program module (CPTL) and at least one part of the performance feature program modules (LH, TS, PC, NC, CD, CDL, CBTQ) with the equipment program modules (DTE, ATE, TTX) via the input and output memories (Mlb-CP, Mlb-DH) of the switching technology task (LDU-T) and of the line technology task (DH-T).

2.  Communications system according to Claim 1, characterised in that the line technology task (DH-T) is supplemented by a switching matrix task (DH-NW-T) having a switching matrix equipment program module (DH-NW) which is administered by a switching matrix task organisation program (DH-NW-TOP).

3.  Communications system according to Claim 1 or 2, characterised in that a periphery memory (DP-RAM), administered by an input/output processor (IOP), in each case has an input terminal, controllable in each case independently from one another, for messages for the terminal equipment, which messages are acquired in the line technology task (DH-T) and/or in the switching matrix task (DH-NW-T), and an output terminal for messages acquired from alerting signals from the terminal equipment.

4.  Communications system according to Claim 3, characterised in that both the input terminal and the output terminal have in each case one transfer memory (Mlb-In; Mlb-Out), operated like a mailbox, allocated to them.

5.  Communications system according to Claim 3 or 4, characterised in that the equipment program modules (DTE, ATE, TTX) of the line technology task (DH-T) are linked to the transfer memory (Mlb-Out) for the messages to be output to the terminal equipment.

6.  Communications system according to Claims 2 and 3, characterised in that the switching matrix task (DH-NW-T) has an input and output memory (Mlb-DH-NW), which is administered by the switching matrix task organisation program (DH-NW-TOP) and is operated like a mailbox, allocated to it, said input and output memory being linked on its input side to the transfer memory (Mlb-In) for the alerting signals input from the terminal equipment.

7.  Communications system according to Claims 2 and 3 or 6, characterised in that the switching matrix equipment program module (NW) of the switching matrix task (DH-NW-T) is linked to the transfer memory (Mlb-Out) for the messages to be output to the terminal equipment.

8.  Communications system according to Claims 4 and 5, characterised in that the transmission of the alerting signal initiated by the terminal equipment from the allocated transfer memory (Mlb-In) to the input and output memories (Mlb-DH; Mlb-DH-NW) of the line technology task (DH-T) and/or of the switching matrix task (DH-NW-T) and/or from the equipment program modules (DTE, ATE; TTX) to the transfer memory (Mlb-Out) for the messages to be output to the terminal equipment takes place in a transport layer of a message protocol of the multitasking operating system.

9. Communications system according to one of Claims 3 to 8, characterised in that the input/output processor (IOP) is equipped with an operating system which is identical to the multitasking operating system.

10. Communications system according to one of Claims 1 to 9, characterised in that the interpretation program level (Interpr) has an allocation program (Mess Assign DH) for discrimination between alerting signals which start a switching-associated process and alerting signals which form additional information for a started process.

11. Communications system according to Claim 10, characterised in that, if an alerting signal which starts a switching-associated subprocess occurs while another switching-associated subprocess is running, the allocation program (Mess Assign) carries out a check for compatibility of the two switching-associated processes and, as a function thereof, starts the second process or suppresses a start message for the new process until a message concerning the completion of the first process occurs.

12. Communications system according to Claim 10 or 11, characterised in that, if alerting messages forming additional information occur, the allocation program (Mess Assign DH) forwards logical messages corresponding thereto to one of the switching procedure program modules.

13. Communications system according to one of Claims 10 to 12, characterised in that the allocation program (Mess Assign DH) comprises a protocol program for the storage of data concerning the nature of each process which has been started and is still continuing.

14. Communications system according to one of Claims 11 to 15, characterised in that at least one type of equipment program modules (DTE, ATE, TTX) has a number of equipment program submodules (SU1...SUn) corresponding to the number of exclusive subsets in each case of all the functions of a terminal equipment, and in that the allocation program (Mess Assign DH) in each case branches to the equipment program submodules (SU1.. SUn) depending on the function.

15. Communications system according to one of Claims 1 to 14, characterised in that at least some of the switching procedure program modules (LDU) have a plurality of switching procedure submodules (SM1...SMn), allocated in each case to a defined subfunction of the connection control, branching to said switching procedure submodules taking place in each case by means of an allocation program (Mess Assign LDU) which is specific to the switching procedure program module.

16. Communications system according to one of Claims 1 to 15, characterised in that the connection control program module (CPTL) is directly subordinated to the switching technology task organization program (TOP LDU) and the performance feature program modules (LH, TS, PC, NC, CD, SCL, SBTQ) are incorporated into the connection control in the form of subprograms of the connection control program module (CPTL).

17. Communications system according to Claim 16, characterised in that the distribution of the performance-feature-related programs to the performance feature program modules (LH, TS, PC, NWC, CD, SCL, SBTQ) is carried out in such a manner that at least the programs related to the performance features which are specific to the communications service are implemented in each case in one performance feature program module.

18. Communications system according to one of Claims 6 to 17, characterised in that the connection control program module (CPTL) has a switching matrix control program module (NWC) allocated to it in which the control of the input and output memories of a digital time-division multiplex switching matrix is implemented in logic, and to which the input and output memory (Mlb-DH-NW) of the switching matrix task (DH-NW-T) is allocated in the sense of converting logic messages into physical switching instructions for the switching matrix.

19. Communications system according to one of Claims 15 to 18, characterised in that a packet-switching switching matrix equipment program module, used for controlling a packet-switching switching matrix, is provided which can be linked to the connection control program module (CPTL) and to a packet-switching switching matrix equipment program module, by means of the program bus structure (SWB-LDM, SWB-PDM).

20. Communications system according to one of Claims 1 to 19, characterised in that memory areas (CRS) are provided in the database (DB) for recording connection-relevant data for the duration of the connection, and other memory areas (VDS), separated therefrom, are provided for recording - volatile - data in each case, which are relevant only during a message exchange.

21. Communications system according to Claim 20, characterised in that the messages transmitted via the program bus structure (SWB-LDM, SWB-PDM) contain memory addresses for the deliberate selection of the memory areas (CRS, VDS) containing connection-relevant and/or volatile data associated with the respective message.

22. Communications system according to one of Claims 1, 20 and 21, characterised in that the messages transmitted via the program bus structure (SWB-LDM, SWB-PDM) contain statements in their header part concerning the program module of a task outputting the message and concerning the program module of a task provided as the receiver.

23. Communications system according to one of Claims 20 to 22, characterised in that a memory block is provided in the memory area (VDS) for recording volatile data for - transparent - data output from a terminal equipment, which data are recorded by one of the equipment program modules (DTE, ATE, TTX) but are processed neither in this equipment program module (DTE, ATE, TTX) nor in one of the switching procedure program modules.

24. Communications system according to Claim 23, characterised in that the transparent data can be output from this memory block to an equipment program module allocated to the type of receiver terminal equipment, for transmission to the receiver terminal equipment.

25. Communications system according to one of Claims 21 to 24, characterised in that the messages comprise service indicators which are oriented to the various possible communications services in a useful data channel of a connection line to the terminal equipment, which service indicators are utilized as a basis for compatibility checks and for determining the type of receiver terminal equipment allocated to the respectively requested communications service.

**Revendications**

1. Système de communication numérique à structure modulaire destiné à raccorder des terminaux présentant de nombreuses caractéristiques de puissance et à des réseaux, notamment publics, comportant un ordinateur central de communication possédant une base de données (DB) du système et au moins un système de fonctionnement multitâches,

- pour gérer une tâche (DA-T) de la technique des lignes, avec des modules de programmes d'appareils (DTE, ATE, TTX), qui sont soumis hiérarchiquement à un programme (TOP-DH) d'organisation des tâches de la technique des lignes exécutant des fonctions de distributeur au sens d'un noeud logique de réseau, commandant, d'une manière spécifique aux types de terminaux, le procédé de signalisation et la surface d'utilisateurs des terminaux et qui ont accès respectivement individuellement à la base de données (DB) du système par l'intermédiaire de sous-programmes définis (DBAR) d'accès à la base de données et qui possèdent un plan de programmes de prétraitement (Prepr), qui évalue des incitations délivrées par les terminaux, en fonction de critères individuels des lignes et convertit des signalisations logiques du calculateur de communication en des données de réglage pour les terminaux, et un plan de programmes d'évaluation (Interpr) qui convertit des incitations délivrées par les terminaux en des signalisations logiques, au moyen de paramètres spécifiques au système, et

- pour gérer une tâche (LDU-T) de la technique de commutation, avec des modules de programmes de procédure de commutation soumis hiérarchiquement à un programme (TOP-LDU) d'organisation des tâches de la technique de commutation exécutant des fonctions de distributeur dans le sens d'un noeud logique du réseau, et qui ont respectivement accès individuellement à la base de données (DB) du système par l'intermédiaire des sous-programmes définis (DBAR) d'accès à la base de données et sont structurés, indépendamment des classes de terminaux et indépendamment des services de communication, de manière à former des processus partiels logiques de l'ensemble du processus de commutation, de telle sorte qu'en dehors d'au moins un module de programme de commande de liaisons (CPTL) pour commander l'établissement et la suppression de liaisons, d'autres modules de programmes (LH,TS,PC,NC,CD, CLD,CBTQ) de caractéristiques de puissance sont formés pour l'activation et la désactivation de procédures correspondantes de commande,

- - une mémoire d'entrée et de sortie (Mlb-DH), gérée par le programme (TOP-DH) d'organisation des tâches de la technique des lignes et fonctionnant à la manière d'une boîte à lettres, étant associée à la tâche (DH-T) de la technique des lignes, et une mémoire d'entrée et de sortie (Mlb-CP) gérée par le programme (TOP-LDU) d'organisation des tâches de la technique de commutation et fonctionnant en tant que boîte à lettres, étant associée à la tâche (LDU-T) de la technique de commutation;

- le système de fonctionnement multitâches forme et gère une structure de bus de transmission de programmes (SWB-LDM, SWB-PDM) selon un protocole de transmission fixé de manière à être valable d'une façon générale indépendamment des services de communication et des terminaux, des signalisations retransmises par cette structure, au sens d'un noeud logique du réseau pour l'intercommunication des modules (CPTL) des programmes de commande de liaison et d'au moins une partie des modules (LH,TS,PC,NC,CD,CDL,CBTQ) de programmes des caractéristiques de puissance avec les modules de programmes d'appareils (DTE,ATE,TTX) par l'intermédiaire des mémoires d'entrée et de sortie (Mlb-CP, Mlb-DH) de la tâche (LDU-T) de la technique de commutation et de la tâche (DH-T) de la technique des lignes.

2. Système de communication suivant la revendication 1, caractérisé par le fait que la tâche (DH-T) de la technique des lignes est complétée par une tâche (DH-NW-T) de champs de couplage avec un module (DH-NW) de programme du champ de couplage géré par un programme (DH-NW-TOP) d'organisation des tâches du champ de couplage.

3. Système de communication suivant la revendication 1 ou 2, caractérisé par le fait qu'une mémoire périphérique (DP-RAM) gérée par un processeur d'entrée/sortie (IOP) possède respectivement une borne d'entrée pour des signalisations obtenues dans la tâche (DH-T) de la technique des lignes et/ou dans la tâche (DH-NW-T) du champ de couplage, pour les terminaux et une borne de sortie des signalisations obtenues à partir d'incitations des terminaux, les bornes d'entrée et de sortie étant respectivement commandables indépendamment l'une de l'autre.

4. Système de communication suivant la revendication 3, caractérisé par le fait que respectivement une mémoire de transfert (Mlb-In; Mlb-Out) fonctionnant à la manière d'une boîte à lettres est associée aussi bien à la borne d'entrée qu'à la borne de sortie.

5. Système de communication suivant la revendication 3 ou 4, caractérisé par le fait que les modules de programmes d'appareils (DTE, ATE, TTX) de la tâche (DH-T) de la technique des lignes sont combinés à la mémoire de transfert (Mlb-Out) pour les signalisations devant être délivrées aux terminaux.

6. Système de communication suivant les revendications 2 et 3, caractérisé par le fait qu'à la tâche (DH-NW-T) du champ de couplage est associée une mémoire d'entrée et de sortie (Mlb-DH-NW), qui est gérée par le programme (DH-NW-TOP) d'organisation des tâches du champ de couplage et fonctionne à la manière d'une boîte à lettres et qui est raccordée, côté entrée, à la mémoire de transfert (Mlb-In) pour les incitations introduites par les terminaux.

7. Système de communication suivant les revendications 2 et 3 ou 6, caractérisé par le fait que le module (NW) de programmes d'appareils de champ de couplage de la tâche (DH-NW-T) du champ de couplage est combiné à la mémoire de tranfert (Mlb-Out) pour les signalisations devant être délivrées aux terminaux.

8. Système de communication suivant les revendications 4 et 5, caractérisé par le fait que le transfert des incitations déclenchées par les terminaux, depuis la mémoire de transfert (Mlb-In) associée, à la mémoire d'entrée et de sortie (Mlb-DH; Mlb-DH-NW) de la tâche (DH-T) de la technique des lignes et/ou de la tâche (DH-NW-T) du champ de couplage et/ou par les modules de programmes d'appareils (DTE,ATE; TTX) à la mémoire de transfert (Mlb-Out) pour les signalisations devant être délivrées aux terminaux s'effectue dans une section de transport d'un protocole de signalisation du système de fonctionnement multitâches.

9. Système de communication suivant l'une des revendications 3 à 8, caractérisé par le fait que le processeur d'entrée/sortie (IOP) est pourvu d'un système de fonctionnement identique au système de fonctionnement multitâches.

10. Système de communication suivant l'une des revendications 1 à 9, caractérisé par le fait que le plan (Interpr) du programme d'évaluation possède un programme d'association (Mess Assign DH) pour établir une distinction entre des incitations qui déclenchent un processus technique de commutation, et des incitations qui constituent des informations supplémentaires pour un processus déclenché.

11. Système de communication suivant la revendication 10, caractérisé par le fait que, lors de l'apparition d'une incitation déclenchant un processus technique partiel de commutation, le programme d'association (Mess Assign) exécute, pendant un autre processus technique partiel de commutation en cours, un contrôle de la compatibilité des deux processus techniques de commutation et, en fonction de cela, déclenche le second processus ou supprime une signalisation de départ pour le nouveau processus, jusqu'à la présence d'une signalisation, au moyen de l'interruption du premier processus.

12. Système de communication suivant la revendication 10 ou 11, caractérisé par le fait que lors de l'apparition d'incitations constituant des informations supplémentaires, le programme d'association (Mess Assign DH) retransmet des signalisations logiques, qui correspondent à ces incitations, à l'un des modules de programmes de procédure de commutation.

13. Système de communication suivant l'une des revendications 10 à 12, caractérisé par le fait que le programme d'association (Mess Assign DH) comprend un programme d'analyse servant à mémoriser des données concernant le type de chaque processus déclenché et qui dure encore.

14. Système de communication suivant l'une des revendications 11 à 15, caractérisé par le fait qu'au moins un type de module de programmes d'appareils (DTE, ATE, TTX) possède un nombre de modules partiels de programmes d'appareils (SU1...SUn), qui correspond au nombre de quantités partielles exclusives respectives de toutes les fonctions d'un terminal, et que le programme d'association (Mess Assign DH) se ramifie respectivement sur la base des fonctions, entre les modules partiels de programmes d'appareils (SU1...SUn).

15. Système de communication suivant l'une des revendications 1 à 14, caractérisé par le fait qu'au moins quelques-uns des modules (LDU) de programmes de procédure de commutation possèdent plusieurs modules partiels (SM1...SMn) de procédure de commutation, associés respectivement à une fonction partielle définie de la commande de liaison entre lesquels la ramification est exécutée respectivement à l'aide d'un programme d'association (Mess Assign LDU) prévu individuellement pour chaque module du programme de la procédure de commutation.

16. Système de communication suivant l'une des revendications 1 à 15, caractérisé par le fait que le module (CPTL) du programme de commande des liaisons est subordonné directement au programme (TOP LDU) d'organisation des tâches de la technique de commutation et que les modules (LH,TS,PC,NC,CD,SCL,SBTQ) des caractéristiques de puissance sont insérés dans la commande des liaisons, sous la forme de sous-programmes du module (CPTL) du programme de commande de liaison.

17. Système de communication suivant la revendication 16, caractérisé par le fait que la répartition des programmes rapportés aux caractéristiques de puissance entre les modules (LH,TS,PC,NWC,CD,SCL,SBTQ) des programmes des caractéristiques de puissance est réalisée de telle sorte qu'au moins les programmes, qui sont rapportés à des caractéristiques de puissance spécifiques aux services de communication, sont mis en oeuvre respectivement dans un module de programme des caractéristiques de puissance.

18. Système de communication suivant l'une des revendications 6 à 17, caractérisé par le fait qu'au module (CPTL) des programmes de commande de liaison est associé un module (NWC) des programmes de commande du champ de couplage, dans lequel la commande de mémoires d'entrée et de sortie d'un champ de couplage numérique à multiplexage temporel est réalisée d'une manière logique et auquel est associée la mémoire d'entrée et de sortie (Mlb-DH-NW) de la tâche (DH-NW-T) du champ de couplage dans le sens de la conversion de signalisations logiques en des instructions physiques de commutation pour le champ de couplage.

19. Système de communication suivant l'une des revendications 15 à 18, caractérisé par le fait qu'il est prévu un module des programmes de commande du champ de couplage de commutation par paquets, qui est utilisé pour commander un champ de couplage à commutation par paquets et peut être raccordé, au moyen de la structure de bus de transmission de programmes (SWB-LDM, SWB-PDM) au module (CPTL) des programmes de commande de liaison et à un module de programme d'appareils du champ de couplage à commutation par paquets.

20. Système de communication suivant l'une des revendications 1 à 19, caractérisé par le fait que dans la base de données (DB), il est prévu des zones de mémoire (CRS) destinées à recevoir des données importantes pour les liaisons, pendant la durée de la liaison, et d'autres zones de mémoire (VDS) séparées des précédentes et servant à recevoir respectivement des données -volatiles- importantes uniquement pendant un échange de signalisation.

21. Système de communication suivant la revendication 20, caractérisé par le fait que les signalisations transmises par l'intermédiaire de la structure du bus de transmission de programmes (SWB-LDM, SWB-PDM) contiennent des adresses de mémoire servant à commander, de la manière voulue, les zones de mémoire (CRS,VDS) contenant les données importantes pour les liaisons et/ou volatiles, associées à la signalisation respective.

22. Système de communication suivant l'une des revendications 1, 20 et 21, caractérisé par le fait que les signalisations retransmises par l'intermédiaire de la structure de bus de transmission de programmes (SWB-LDM, SWB-PDM) contiennent, dans leur partie de tête, des indications concernant le module de programme qui délivre la signalisation d'une tâche et, par l'intermédiaire du module de programme, prévu en tant que récepteur, des indications concernant une tâche.

23. Système de communication suivant l'une des revendications 20 à 22, caractérisé par le fait que dans la zone de mémoire (VDS) servant à recevoir des données volatiles, il est prévu un bloc de mémoire pour des données -transparentes- qui sont délivrées par un appareil terminal et sont reçues par l'un des modules de programmes d'appareils (DTE,ATE,TTX), mais ne sont traitées ni dans ce module de programmes d'appareils (DTE,ATE,TTX), ni dans un module de programme de procédure de commutation.

24. Système de communication suivant la revendication 23, caractérisé par le fait que les données transparentes sont délivrées à partir de ce bloc de mémoire à un module de programmes d'appareils (DTE,ATE,TTX), associé au type du terminal de réception, pour leur envoi à ce terminal de réception.

25. Système de communication suivant l'une des revendications 21 à 24, caractérisé par le fait que les signalisations envoyées aux différents services de communication possibles dans un canal utile de données d'une ligne de jonction contiennent des indicateurs de service axés sur les terminaux

et qui sont utilisés en tant que base pour des contrôles de compatibilité et pour la détermination du type d'appareil terminal de réception associé au service respectivement demandé de communication.

# FIG 1

## FIG 2

SWB

Interpr

| Mess | Assign | DH |

DH

SU1    SU2    . . .    SUn

| Mess | Assign | DH |

Prepr

PER

## FIG 3

LDU

SM1    SM2    . . .    SMn

| Mess | Assign LDU |

SWB

## FIG 4

## FIG 5

# FIG 6

| | |
|---|---|
| System Header | SRC - TASK |
| | SRC - SU-TASK |
| | DEST - TASK |
| | DEST - SU - TASK |
| | EVENT CODE |
| Spez. Header | PORT NR. |
| | CALL REF |
| | SERV IND |
| | PORT NR. |
| | CALL REF |
| | SERV IND |
| | SRC CRSP |
| Datenteil | |

# FIG 7

# FIG 8

# FIG 9